(19) Europäisches Patentamt / European Patent Office / Office européen des brevets

(11) EP 1 863 241 A2

(12) EUROPEAN PATENT APPLICATION

(43) Date of publication:
05.12.2007 Bulletin 2007/49

(51) Int Cl.:
H04L 25/02 (2006.01)    H04L 25/03 (2006.01)
H04L 1/06 (2006.01)

(21) Application number: 07018708.3

(22) Date of filing: 11.08.2003

(84) Designated Contracting States:
DE FR

(30) Priority: 15.08.2002 GB 0219056

(62) Document number(s) of the earlier application(s) in accordance with Art. 76 EPC:
03254971.9 / 1 392 029

(71) Applicant: Kabushiki Kaisha Toshiba
Minato-ku, Tokyo 105-8001 (JP)

(72) Inventor: Piechocki, Robert Jan
Bristol BS1 4ND (GB)

(74) Representative: Round, Edward Mark
Marks & Clerk
90 Long Acre
London WC2E 9RA (GB)

Remarks:
This application was filed on 24 - 09 - 2007 as a divisional application to the application mentioned under INID code 62.

(54) **Channel tracking and signal detection in MIMO systems**

(57)    This invention generally relates to apparatus, methods and computer program code for decoding a received signal where the signal is received by a received antenna from a plurality of transmit antennas. The invention addresses the further difficulties which arise when only limited or known information for deriving an estimate of the responses of the channels between the transmit antennas and the receive antenna is available.

There is described a method of decoding a signal transmitted from a plurality of transmit antennas and received by at least one receive antenna, the transmitted signal comprising a codeword vector c having elements $c_1$ to $c_{NT}$ where NT is the number of transmit antennas, elements $c_1$ to $c_{NT}$ denoting respective symbols transmitted from each transmit antenna, the codeword c being generated by a coding machine operating on input data symbols and having a finite plurality of states, said coding machine having a set of allowed transitions between said states, transitions of said machine being determined by a sequence of said input data symbols, a set of channel responses describing the response of each channel between a said transmit antenna and said at least one receive antenna, the signal received at said at least one receive antenna comprising a combination of the signals transmitted from each transmit antenna, each transmitted signal being modified by a respective one of said set of channel responses, the method comprising determining an initial estimate for said set of channel responses and selecting an assumed initial state of said coding machine; extrapolating from said initial estimate and state using said received signal to determine a set of estimated transmitted codewords and associated sets of channel responses, each estimated codeword having an associated estimated set of channel responses; and determining an estimated input data symbol sequence from said set of estimated transmitted codewords to decode said received signal; and wherein said extrapolating comprises a plurality of iterations, each iteration comprising establishing a set of allowed transitions from each possible state of said coding machine at a said iteration to each allowed new state of said coding machine for a next iteration; selecting, for each allowed new state of said coding machine with a plurality of allowed transitions to the new state, one of said plurality of transitions by estimating a set of channel responses for each said allowed transition and comparing, for each said allowed transition, said received signal to a codeword associated with the transition modified by said estimated set of channel responses associated with the transition; and then updating the estimated set of channel responses associated with the selected transition using said received signal.

Figure 8

EP 1 863 241 A2

**Description**

This invention generally relates to apparatus, methods and computer program code for decoding a received signal where the signal is received by a received antenna from a plurality of transmit antennas. The invention addresses the further difficulties which arise when only limited or known information for deriving an estimate of the responses of the channels between the transmit antennas and the receive antenna is available.

The invention will be mainly described in the context of a MIMO-OFDM (Mulitple-Input Mutiple-Output Orthogonal Frequency Division Multiplexed) communication system, although applications of the invention are not limited to such systems and examples will also be given of the application of the invention to time rather than frequency domain coding.

The current generation of high data rate wireless local area network (WLAN) standards, such as Hiperlan/2 and IEEE802.11a, provide data rates of up to 54 Mbit/s. However, the ever-increasing demand for even higher data rate services, such as Internet, video and multi-media, have created a need for improved bandwidth efficiency from next generation wireless LANs. The current IEEE802.11 a standard employs the bandwidth efficient scheme of Orthogonal Frequency Division Multiplex (OFDM) and adaptive modulation and demodulation. The systems were designed as single-input single-output (SISO) systems, essentially employing a single transmit and receive antenna at each end of the link. However within ETSI BRAN some provision for multiple antennas or sectorised antennas has been investigated for improved diversity gain and thus link robustness.

Hiperlan/2 is a European standard for a 54Mbps wireless network with security features, operating in the 5GHz band. IEEE 802.11 and, in particular, IEEE 802.11a, is a US standard defining a different networking architecture, but also using the 5GHz band and providing data rates of up to 54Mbps. The Hiperlan (High Performance Radio Local Area Network) type 2 standard is defined by a Data Link Control (DLC) Layer comprising basic data transport functions and a Radio Link Control (RLC) sublayer, a Packet based Convergence Layer comprising a common part definition and an Ethernet Service Specific Convergence Sublayer, a physical layer definition and a network management definition. For further details of Hiperlan/2 reference may be made to the following documents, which are hereby incorporated by reference: ETSI TS 101 761-1 (V1.3.1): "Broadband Radio Access Networks (BRAN); HIPERLAN Type 2; Data Link Control (DLC) Layer; Part 1: Basic Data Transport Functions"; ETSI TS 101 761-2 (V1.2.1): "Broadband Radio Access Networks (BRAN); HIPERLAN Type 2; Data Link Control (DLC) Layer; Part 2: Radio Link Control (RLC) sublayer"; ETSI TS 101 493-1 (V1.1.1): "Broadband Radio Access Networks (BRAN); HIPERLAN Type 2; Packet based Convergence Layer; Part 1: Common Part"; ETSI TS 101 493-2 (V1.2.1): "Broadband Radio Access Networks (BRAN); HIPERLAN Type 2; Packet based Convergence Layer; Part 2: Ethernet Service Specific Convergence Sublayer (SSCS)"; ETSI TS 101 475 (V1.2.2): "Broadband Radio Access Networks (BRAN); HIPERLAN Type 2; Physical (PHY) layer"; ETSI TS 101 762 (V1.1.1): "Broadband Radio Access Networks (BRAN); HIPERLAN Type 2; Network Management". These documents are available from the ETSI website at www.etsi.org.

A typical wireless LAN (Local Area Network) based on the Hiperlan/2 system. comprises a plurality of mobile terminals (MT) each in radio communication with an access point (AP) or base station of the network. The access points are also in communication with a central controller (CC) which in turn may have a link to other networks, for example a fixed Ethernet-type local area network. In some instances, for example in a Hiperlan/2 network where there is no local access point, one of the mobile terminals may take the role of an access point/central controller to allow a direct MT to MT link. However in this specification references to "mobile terminal" and "access point" should not be taken to imply any limitation to the Hiperlan/2 system or to any particular form of access point (or base station) or mobile terminal.

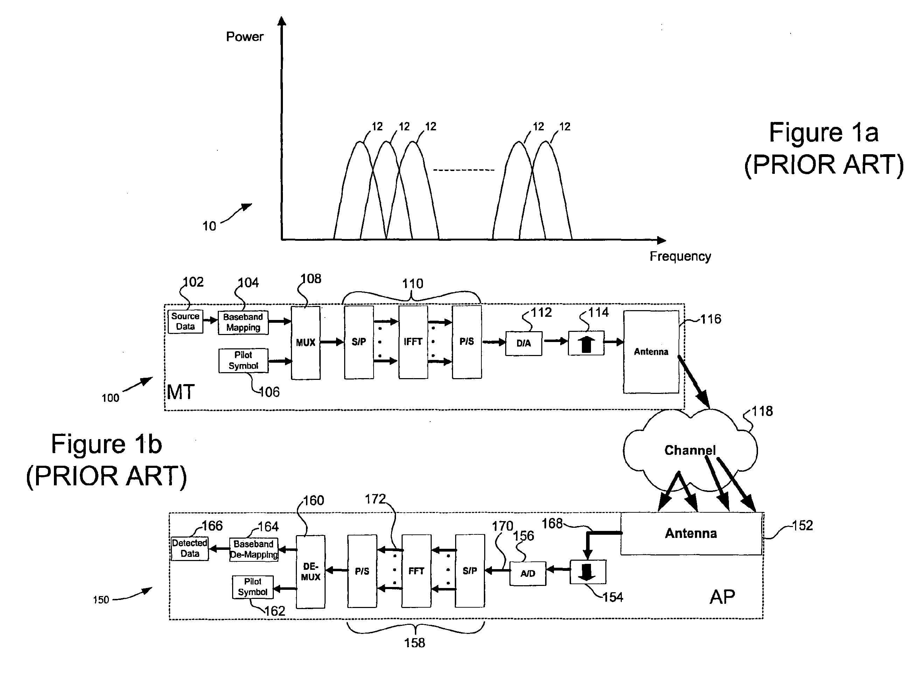

Orthogonal frequency division multiplexing is a well-known technique for transmitting high bit rate digital data signals. Rather than modulate a single carrier with the high speed data, the data is divided into a number of lower data rate channels each of which is transmitted on a separate subcarrier. In this way the effect of multipath fading is mitigated. In an OFDM signal the separate subcarriers are spaced so that they overlap, as shown for subcarriers 12 in spectrum 10 of Figure 1a. The subcarrier frequencies are chosen that so that the subcarriers are mutually orthogonal, so that the separate signals modulated onto the subcarriers can be recovered at the receiver. One OFDM symbol is defined by a set of symbols, one modulated onto each subcarrier (and therefore corresponds to a plurality of data bits). The subcarriers are orthogonal if they are spaced apart in frequency by an interval of 1/T, where T is the OFDM symbol period.

An OFDM symbol can be obtained by performing an inverse Fourier transform, preferably an Inverse Fast Fourier Transform (IFFT), on a set of input symbols. The input symbols can be recovered by performing a Fourier transform, preferably a fast Fourier transform (FFT), on the OFDM symbol. The FFT effectively multiplies the OFDM symbol by each subcarrier and integrates over the symbol period T. It can be seen that for a given subcarrier only one subcarrier from the OFDM symbol is extracted by this procedure, as the overlap with the other subcarriers of the OFDM symbol will average to zero over the integration period T.

Often the subcarriers are modulated by QAM (Quadrature Amplitude Modulation) symbols, but other forms of modulation such as Phase Shift Keying (PSK) or Pulse Amplitude Modulation (PAM) can also be used. To reduce the effects of multipath OFDM symbols are normally extended by a guard period at the start of each symbol. Provided that the relatively delay of two multipath components is smaller than this guard time interval there is no inter-symbol interference (ISI), at least to a first approximation.

Figure 1b shows an example of a conventional SISO (single-input, single-output) OFDM system including a transmitter 100 (here in a mobile terminal, MT) receiver 150 (here in an access point, AP). In the transmitter 100 a source 102 provides data to a baseband mapping unit 104, which optionally provides forward error correction coding and interleaving, and which outputs modulated symbols such as QAM symbols. The modulated symbols are provided to a multiplexer 108 which combines them with pilot symbols from a pilot symbol generator 106, which provides reference amplitudes and phases for frequency synchronisation and coherent detection in the receiver (in other arrangements differential detection may be employed). The combination of blocks 110 converts the serial data stream from multiplexer 108 to a plurality of parallel, reduced data rate streams, performs an IFFT on these data streams to provide an OFDM symbol, and then converts the multiple subcarriers of this OFDM symbol to a single serial data stream. This serial (digital) data stream is then converted to an analogue time-domain signal by digital-to-analogue converter 112, up-converted by up-converter 114, and after filtering and amplification (not shown) output from an antenna 116. Antenna 116 may comprise an omni-directional antenna, a sectorised antenna or an array antenna with beamforming.

The signal from antenna 116 of transmitter 100 is received by an antenna 152 of receiver 150 via a "channel" 118. Typically the signal arrives at antenna 152 as a plurality of multipath components, with a plurality of different amplitudes and phases, which have propagated via a plurality of different channels or paths. These multipath components combine at the receiver and interfere with one another to provide an overall channel characteristic typically having a number of deep nulls, rather like a comb, which generally change with time (particularly where the transmitter or receiver is moving). Often there will be a number of transmitters in the same general location, for example an office, and this gives rise to co-channel interference, which can be more problematic than multipath.

The antenna 152 of receiver 150 is coupled to a down-converter 154 and to an analogue-to-digital converter 156. Blocks 158 then perform a serial-to-parallel conversion, FFT, and parallel-to-serial re-conversion, providing an output to demultiplexer 160, which separates the pilot symbol signal 162 from the data symbols. The data symbols then demodulated and de-mapped by base-band de-mapping unit 164 to provide a detected data output 166. Broadly speaking the receiver 150 is a mirror image of the transmitter 100. The transmitter and receiver may be combined to form an OFDM transceiver.

OFDM techniques may be employed in a variety of applications and are used, for example, for military communication systems and high definition TV as well as Hiperlan/2 (www.etsi.org/technicalactiv/hiperlan2.htm, and DTS/BRAN-0023003 v 0.k).

The receiver of Figure 1b is somewhat simplified as, in practice, there is a need to synchronise the FFT window to each OFDM symbol in turn, to avoid introducing non-orthogonality and hence ISI/ICI (Inter-Symbol Interference/Inter-Carrier Interference). This may be done by auto-correlating an OFDM symbol with the cyclic extension of the symbol in the guard period but it is generally preferable, particularly for packet data transmission, to use known OFDM (training) symbols which the receiver can accurately identify and locate, for example using a matched filter. It will be appreciated that this matched filter operates in the time domain, that is before the FFT is carried out (as opposed to the post-FFT frequency domain). In a packet data system data packets may be provided with a preamble including one or more of these training symbols.

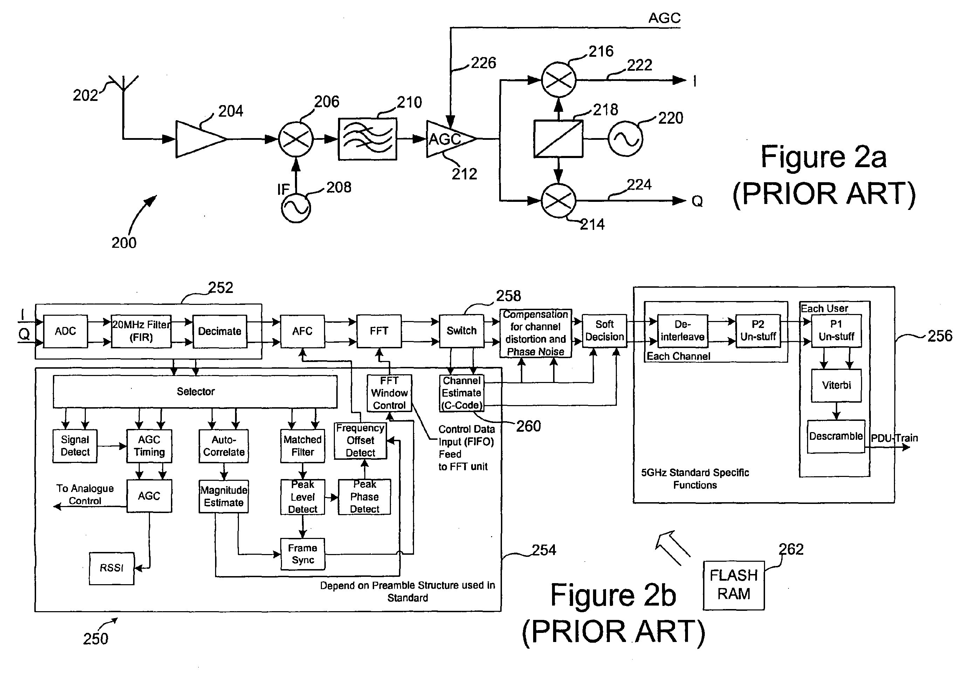

Figures 2a and 2b show, respectively, a receiver front end 200 and receiver signal processing blocks 250 of a conventional HIPERLAN 2 mobile terminal (MT) OFDM receiver. The receiver 250 shows some details of the analogue-to-digital conversion circuitry 252, the synchronisation, channel estimation and control circuitry 252 and the de-packetising, de-interleaving and error correcting circuitry 256.

The front end 200 comprises a receive antenna 202 coupled to an input amplifier 204 and a mixer 206, which has a second input from an IF oscillator 208 to mix the RF signal to IF. The IF signal is then provided to an automatic Automatic Gain Control (AGC) amplifier 212 via a band pass filter 210, the AGC stage being controlled by a line 226 from control circuitry 254, to optimise later signal quantisation. The output of AGC 212 provides an input to two mixers 214, 216, which are also provided with quadrature signals from an oscillator 220 and splitter 218 to generate quadrature I and Q signals 222, 224. These I and Q signals are then over-sampled, filtered and decimated by analogue-to-digital circuitry 252. The over-sampling of the signal aids the digital filtering, after which the signal is rate reduced to the desired sample rate.

It is desirable (but not absolutely essential) to compensate for the effects of the transmission channel. This can be done using a known symbol, for example in preamble data or one or more pilot signals. In the receiver 250 of Figure 2 a known preamble symbol, referred to as the "C symbol", is used to determine a channel estimate. The receiver synchronises to the received signal and switch 258 is operated to pass the received C symbol to channel estimator 260. This estimates the effect of the channel (amplitude change and phase shift of the symbols in the sub-carriers) on the known C symbol so that the effects of the channel can be compensated for, by multiplying by the reciprocal (or complex conjugate) of the channel response. Alternatively the one or more pilot signals (which also contain known symbols) can be used to determine a channel estimate. Again the phase rotation and amplitude change required to transform the received pilot into the expected symbol can be determined and applied to other received symbols. Where more than one pilot is available at more than one frequency improved channel compensation estimates can be obtained by interpolation/extrapolation to other frequencies using the different frequency pilot signals.

In Figure 2 the receiver front-end 200 will generally be implemented in hardware whilst the receiver processing section 250 will usually be implemented at least partially in software, as schematically illustrated by Flash RAM 262. Fore example one or more digital signal processors (DSPs) and/or one or more ASICs or FPGAs may be employed. The skilled person will recognise that all the functions of the receiver of Figure 2 (or of an equivalent transmitter) could be performed in hardware. Similarly the exact point at which the signal is digitised in a software radio will generally depend upon a cost/complexity/power consumption trade-off, as well as upon the availability of suitable high speed analogue/digital converters and processors, and that the RF signal could be digitised at IF or a higher frequency.

Until recently considerable effort was put into designing systems so as to mitigate for the perceived detrimental effects of multipath propagation, especially prevalent in indoor wireless LAN environments. However the described work G.J. Foschini and M.J. Gans, "On limits of wireless communications in a fading environment when using multiple antennas" Wireless Personal Communications vol. 6, no.3, pp.311-335, 1998 has shown that by utilising multiple antenna architectures at both the transmitter and receiver, so-called multiple-input multiple-output (MIMO) architectures, vastly increased channel capacities are possible. The ideas behind space-time trellis coded modulation (STTCM) were first presented in V. Tarokh, N. Seshadri, and A. Calderbank, "Space-time codes for high data rate wireless communication - performance criterion and code construction", IEEE Trans on Information Theory, vol. 44, no.2, pp.744-765, 1998. Broadly speaking STTCM is a generalisation of trellis coded modulation, with redundancy in the space domain. The coding can be described by a Markov chain. Attention has turned to the adoption of space-time coding techniques to wideband channels, and in particular their usage in OFDM-based systems where coding is performed in the space-frequency domain Space Frequency Trellis Coding (SFTC). This is described in D. Agraval, V. Tarokh, A. Naguib, and N. Seshadri, "Space-time coded OFDM for high date rate wireless communications over wideband channels", in Proc. 48th IEEE VTC, Ottawa, Canada, 1998. Maximum likelihood detection of SFTC requires provision of the channel state information (CSI). Typically the CSI is acquired via training sequences for example, both Hiperlan/2 and IEEE802.11 a standards include transmission of preambles for this purpose). The resulting CSI estimates are then fed to a Space-Frequency Viterbi decoder, which performs a MLSE (Minimum Least Squares Estimate) search.

A technique for space-time code detection based upon the use of periodic pilot sequences and interpolation filters is described in A. Naguib, V. Tarokh, N Seshadri and A. Calderbank "A space-time coding based model for high data rate wireless communications" IEEE J-SAC vol. 16, pp. 1459-1478. Oct 1998.

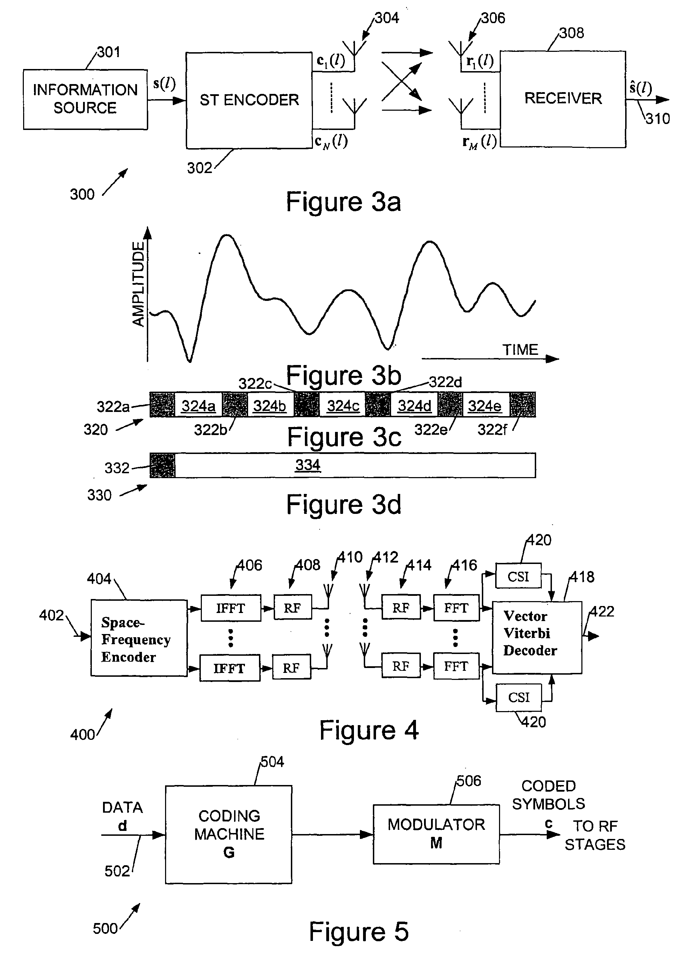

Figure 3a shows a model of the communication system 300 in the context of which the technique described in Naguib et al operates. In information source 301 provides an information symbol s(1) at time 1 to a space-time encoder 302 which encodes the symbol as $N$ code symbols $c_1(1)$ $c_2(1)$...., $c_N(1)$, each of which is transmitted simultaneously from one of transmit antennas 304. A plurality $M$ of received antennas 306 receives respectively signals $r_1(1)$, ....$r_M(1)$ which are input to receiver 308. The receiver 308 provides on output 310 an estimate $\hat{s}(1)$ of the encoded transmitted symbol $\hat{s}(1)$. There is a plurality of channels between the transmit and receive antennas, for example all channels with two transmit antennas and two receive antennas. The time variation of one of these channels is illustrated in Figure 3b. The technique described in Naguib et al requires the insertion into the transmitted signal of periodic pilot sequences, as shown in Figure 3c, to allow the responses of these channels to be estimated.

Figure 3c shows a data frame 320 which includes periodic pilot sequences 322a-m interspersed with data 324a-e. The intervals between the pilot sequences 322 are dictated by the magnitude of the expected time variations of the channels, which must be predetermined before transmission. If one or more channels change faster than expected, this method fails. Conversely, if a channel fades slower than expected bandwidth is wasted as more pilot sequences have been included than are necessary.

Figure 3d shows a data frame 330 with a single initial pilot sequence 332 followed by data 334. Embodiments of the invention aim to permit the use of such a data frame even where one or more of the channels shown in Figure 3a are changing rapidly.

Figure 4 shows a space-frequency coded MIMO-OFDM communications system 400. Input data 402, which may already have been forward error corrected, for example by a block encoder, is processed by a coding machine 404 which performs a space-frequency encoding operation, as described in more detail below. The space-frequency encoder 404 provides outputs for driving a plurality of IFFT (Inverse Fast Fourier Transform) blocks 406, which in turn drive corresponding rf stages 408 and transmit antennas 410. The IFFT blocks 406 are configured to add a cyclic prefix to the transmitted OFDM symbols, in the time domain. In a conventional OFDM system a plurality of pilot subcarriers are provided by the transmitter, not for channel estimation but for frequency synchronisation and phase tracking.

In the corresponding receiver a plurality of receive antennas 412 provide inputs to corresponding rf front ends 414 which in turn drive respective FFT (Fast Fourier Transform) blocks 416 providing inputs to a vector Viterbi decoder 418. Channel state information is determined from the outputs of FFT blocks 416 by CSI blocks 420 and provided to the Viterbi decoder 418. Decoder 418 provides an output 422 comprising an estimate of the data sequence on input 402 of the transmitter. Background information on the Viterbi decoding technique can be found in G. D. Forney, Jr. "The Viterbi Algorithm", Proc. IEEE vol. 61(3), March 1973, pages 267-278, and J.G. Proakis, "Digital Communications", McGraw Hill, 3/e 1995.

The skilled person will appreciate that although the transmitter and receiver of Figure 4 are, for convenience, drawn in block diagram form in practice elements of the transmitter and receiver other than rf blocks 408 and 414 are likely to be implemented in software, for example on a digital signal processor, or may be specified in software by a design engineer using, for example, a hardware description language such as VHDL, the precise hardware implementation then being determined by the hardware description language compiler.

The arrangement of Figure 4 effectively provides a set of parallel OFDM transmitters each transmitting a coded sequence of data derived from a code word produced by the encoder 404. Broadly speaking the encoder 404 and IFFT blocks 406 of Figure 4 accept a string of length $l$ of modulation symbols, as might be applied to a single OFDM transmitter, and produce a set of $N_T$ of OFDM symbols, where $N_T$ is the number of transmit antennas, each of the same length $l$. The mapping to a set of symbols is performed using trellis coded modulation for sets of strings which are processed with IFFT, as expressed more mathematically later. In a typical arrangement along the lines of Figure 1 two transmit antennas are provided and one, two, four or more receive antennas are employed, better results being obtained with more receive antennas.

The arrangement of Figure 4 shows a MIMO-OFDM system with space-frequency encoding but embodiments of the invention, to be described later, may also be employed with space-frequency/time encoded MIMO-OFDM.

When STTCM is applied to OFDM systems the coding takes place across frequency and space rather than time and space. In the time domain the amount of available diversity is related to the Doppler phenomenon. Hence for low mobility high data rate systems (as addressed by some embodiments of the invention), the channel remains almost constant over a frame. Conversely, the delay spread in the radio channel gives rise to diversity in the frequency domain.

Consider an OFDM system employing a cyclic prefix (CP), where the $i^{th}$ transmitted block of data $\bar{u}_i$ (that is one of the set of $N_T$ OFDM symbols) is given by $\bar{u}_i = T_{CP}F^{-1}u_i$. where $F^{-1}$ denotes an inverse FFT operation and TCP is a time domain matrix configured to add the cyclic prefix. The data vector $u_i$ is of length $K$ and provides an input rf blocks 408 of Figure 4; the CP insertion matrix $T_{CP}$ has a size $P \times K$ where $P = C + K$ and $C$ represents the length of the cyclic prefix, and the fourier transform matrix $F$ has size $K \times K$.

The OFDM receiver of Figure 4 receives the current transmitted block of data $\bar{u}_i$ and a fraction of the previous block of data as a consequence of the (excess length of) the channel impulse response. In other words, multipath delay has the effect of causing received signals for successively transmitted blocks of data to overlap. In effect the channel has some memory so that the data $x_i$ received at each receive antenna is dependent upon both $\bar{u}_i$ and $\bar{u}_{i-1}$. This is described by so-called Toeplitz channel matrixes $H_0$ and $H_1$, the received signal block pertaining to $u_i$ being given by equation 1 below.

$$\bar{\mathbf{x}}_i = \mathbf{H}_0\bar{\mathbf{u}}_i + \mathbf{H}_1\bar{\mathbf{u}}_{i-1} + \bar{\eta}_i \qquad \text{Equation 1}$$

Both the above channel matrices are of size $P \times P$ and are given by: $(h_0....h_{L-1}0...0)^T$ for the first column and $(h_00....0)$ for the first row of $H_0$; and $(0....0)^T$ for the first column and $(0....h_{L-1}....h_1)$ for the first row of $H_1$, where L is the length of the channel in taps, each tap corresponding to one symbol period. In equation 1 $\eta_i$ represents an additive noise vector. The length of the cyclic prefix $C$ is chosen so that $C \geq L-1$, to provide a guard period. The receiver removes the first C entries of $x_i$, which are affected by IBI (Interblock Interference) but this does not remove information because the cyclic prefix merely comprises an extension of the OFDM symbol. The removal is performed by pre-multiplication with a matrix $T_R$ defined as $T_R = [0_{KxC}, I_{KxK}]$ where $I$ is the identity matrix. Thus the input-output relationship can be expressed by equation 2 below.

$$\mathbf{x}_i = \mathbf{F}\mathbf{T}_R\mathbf{H}_0\mathbf{T}_{CP}\mathbf{F}^{-1}\mathbf{u}_i + \mathbf{F}\eta_i \qquad \text{Equation 2}$$

The CP insertion matrix $T_{CP}$ is constructed such that the concatenation $T_RH_0T_{CP}$ is a circulant matrix, to create a cyclic convolution, and thus is diagonalised by $F$. Thus $FT_RH_0T_{CP}F^{-1} = \Lambda = \text{diag } \{\lambda^{(1)},....\lambda^{(K)}\}$ and hence

$$\mathbf{x} = \Lambda\mathbf{u} + \mathbf{F}\eta \qquad\qquad \text{Equation 3}$$

where the block index i has been dropped since IBI has been alleviated.

Figure 5 shows a pictorial representation of an information encoding process 500. An incoming stream of data bits **d** 502 to be transmitted is input to a coding machine 504 described by a generator matrix **G** which in turn provides an output to a modulator 506 which performs a modulation mapping function $M$ to output coded symbols **c** for transmission by subsequent rf stages.

To describe this process in mathematical terms the formalism adopted by S. Baro, G. Bauch, and A. Hansmann, "Improved codes for space-time trellis coded modulation," IEEE Communications Letters, vol.4, no. 1, 2000 is used, which formalism is specifically incorporated by reference. This uses a generating matrix representation of STTCM codes and of the encoding process; here this representation is extended to STC-and SFC-OFDM. Further, although the Baro et al paper specifically refers to PSK (Phase Shift Keying) modulation the procedures presented here, and applications of embodiments of the invention are not restricted to this form of modulation. Thus a frequency-space code word c at a subcarrier (or time, in a non-OFDM system) $k$, $\mathbf{c}_k$ is given by equation 4 below.

$$\mathbf{c}_k = \mathcal{M}\left(\mathbf{d}_k \mathbf{G} \left(\mathrm{mod}M\right)\right) \qquad\qquad \text{Equation 4}$$

In Equation 4 $\mathbf{d}_K = (d_{mk}+_{(m-1)}.....d_{mk}......d_{mk-s})$ where $d$ represents a single input data bit having a value of 0 or 1; where m = log2 $M$ where $M$ is the alphabet length of the modulation process $M,$ for example $M$-PSK, so that $m$ information bits are mapped onto (and transmitted in) a modulation $M$ symbol; and where $2^s$ defines the number of states of the coding machine (or memory elements where the coding machine is viewed as a shift register). Here $mk$ denotes '$m$ times $k$' and $\mathbf{d}_k$ is an $m + s$ long stream of input bits influencing the coded symbols at frequency (or time, in a non-OFDM system) index $k$.

The code is defined by a generator matrix **G** with $N_T$ columns, where $N_T$ is the number of transmit antennas, and m + s rows (so that the number of rows determines, although is not equal to the number of states of the coding machine once $M$ has been chosen), each entry being between 0 and $M - 1$. The modulation mapping function $M$ maps one integer value element of a ring $\mathbf{d}_k\mathbf{G}$ to a complex number, in the case of $M$-PSK to a value in the $M$-PSK constellation; $M(x) = \exp(2\pi j x/M)$.

The codeword vector $\mathbf{c}_k$ has a length equal to the number of transmit antennas or IFFT blocks. For example for two transmit antennas (or IFFT blocks) $\mathbf{c}_k = [\, c^1,\, c^2,....c_k^1 c_k^2]^T$, in an OFDM system $k$ vectors $\mathbf{c}_k$ creating two full OFDM symbols for the two transmit antennas, in a time domain system comprising codewords successively transmitted at times 1 to $k$ (denoted henceforth 1:$k$).

It will be appreciated that the larger the number of states $2^s$ the longer the sequence $\mathbf{d}_K$ influencing $\mathbf{c}_k$. As $k$ increments by one to $k + 1$, $\mathbf{d}_k$ moves $m$ bits along the input data so that successive $\mathbf{d}_k$ vectors overlap by $s$ bits. The amount of overlap is thus determined by the number of states of the coding machine. In effect, at each frequency or time index $k$ the encoding machine is in one of a finite number of possible conditions or states, the condition or state of the machine being determined by the input data sequence. Further background information on binary trellis codes is provided by Proakis "Digital Communications"(*ibid*).

In general a larger number of coding machine states allows a greater Euclidean distance between codewords $\mathbf{c}_k$ (in terms of a trellis creating a greater number of possible paths) and thus facilitates accurate decoding, albeit at the cost of increased decoder complexity or memory requirements. The choice of the number of states of the coding machine, in effect the choice of **G** given the chosen modulation, will depend upon the intended application and will generally involve a trade off of performance against complexity. For example for a 4-PSK (i.e. QPSK) space-time code with four states (m = s = 2), which corresponds to delay diversity in a non-OFDM system, as discussed in Baro et al. *(ibid),* an exemplary **G** for two transmit antennas is:

$$G = \begin{matrix} 2 & 0 \\ 1 & 0 \\ 0 & 2 \\ 0 & 1 \end{matrix}$$

so that two current data bits are grouped and transmitted a 4-PSK symbol from one of the antennas and two grouped preceding data bits are simultaneously transmitted as a 4-PSK symbol from the other antenna. Further examples of space-time codes are given in Naguib et al. (*ibid*) and these are herby incorporated by reference.

In order to facilitate the description of a frequency-space coded FSC-OFDM system with $N_T$ transmit and $N_R$ receive antennas, a set of $K$ ($k$ = 1 to $K$) $N_R$ x $N_T$ dimensional matrices $H_{1:K}$ is defined with

$$\mathbf{H}_k = \begin{bmatrix} \lambda_{1,1}^{(k)} & \lambda_{1,2}^{(k)} & \cdots & \lambda_{1,N_T}^{(k)} \\ \lambda_{2,1}^{(k)} & \lambda_{2,2}^{(k)} & \cdots & \lambda_{2,N_T}^{(k)} \\ \vdots & \vdots & \ddots & \vdots \\ \lambda_{N_R,1}^{(k)} & \lambda_{N_R,2}^{(k)} & \cdots & \lambda_{N_R,N_T}^{(k)} \end{bmatrix} \qquad \text{Equation 5}$$

where $\lambda^{(k)}_{m,n}$ represents the frequency response of a channel between the $n^{th}$ transmit and the $m^{th}$ receive antenna at the $k^{th}$ sub-carrier (or, for a non-OFDM system, at the $k^{th}$ time instant) and $K$ defines a frame, for example one (or more) OFDM symbols or a time domain frame such as that illustrated in Figure 3d. Here a channel $\mathbf{c}_k$ includes the responses of rf blocks 408, 414 and of IFFT blocks 406 and FFT blocks 416, and $\mathbf{H}_K$ may be termed the response of a MIMO matrix channel. From this denoting $\mathbf{y}_k = \left[ x_1^{(k)}, \ldots, x_{N_R}^{(k)} \right]^T$ it can be shown that the received signal at the $k^{th}$ sub-carrier has a form:

$$\mathbf{y}_k = \mathbf{H}_k \mathbf{c}_k + \mathbf{n}_k \qquad \text{Equation 6.}$$

It is not immediately obvious that a received signal which is modelled as a convolution equation (1) can be written in the format of equation (6), that is as a linear combination of code words. The equation 6 expression of the received signal is easier to manage and in an additive white Gaussian noise (AWGN) channel a maximum likelihood decoder for equation 6 can be realised using a Viterbi algorithm with a Euclidean metric given by equation (7) below.

$$\mathbf{C} = \underset{\tilde{\mathbf{C}}=\tilde{\mathbf{c}}_1 \ldots \tilde{\mathbf{c}}_K}{\arg\min} \sum_{k=1}^{K} \left\| \mathbf{y}_k - \mathbf{H}_k \tilde{\mathbf{c}}_k \right\|^2 \qquad \text{Equation 7}$$

The notation of equation (7) expresses the condition that $\hat{\mathbf{C}}$, which comprises $\tilde{\mathbf{c}}_1 \ldots \tilde{\mathbf{c}}_K$ is chosen such that the sum over k for the code words $\tilde{\mathbf{c}}_k$ (where ~ denotes a decoded sequence) has a minimum Euclidean distance ("arg min" denoting a choice which minimises the argument) from an estimated received signal. However it will be appreciated that to construct a decoder based upon equation (7) a set of possible codes $c_k$ and, more particularly, a set of channel estimates $\{\hat{\mathbf{H}}_{1:K}\}$ is required. According to prior art techniques these channel estimates are derived using a known preamble and/or pilot sequence and the set $\{\hat{\mathbf{H}}_{1:K}\}$ is determined prior to the detection.

It is known to apply per-survival processing (PSP) blind trellis search techniques to address the problem of estimating/equalising unknown or fast changing channels (see, for example, R. Raheli, Polydoros, and C. Tzou, "Per-survivor processing: A general approach to mlse in uncertain environments", IEEE Transactions on Communications, vol. 43, no. 234, pp.354-364, 1995, and S. Baro, G. Bauch, and A. Hansmann, "Improved codes for space-time trellis coded modulation," IEEE Communications Letters, vol. 4, no. 1, 2000). Such PSP techniques are based upon adaptive Viterbi and grandient-based (for example least mean squares) detection algorithms and were developed in the context of blind MLSE (Maximum Likelihood Sequence Estimation) equalisation. The approach employed by embodiments of the invention builds upon such techniques since PSP is not suitable for MIMO systems. In particular PSP techniques are not able to handle equation 6, which is because, in practical terms, where there are multiple transmit antennas there is a problem relating to the ambiguity of the source of a received signal since received signals from the multiple transmit antennas are mixed. With multiple receive antennas and a single transmit antenna the signal from each receive antenna can be used to estimate a channel but with multiple transmit antennas if no channel estimate is available PSP techniques cannot predict which source a signal came from. In effect an observer at the received end of the system observes a sum of transmitted signals each modified by the respective channel through which they have arrived and PSP techniques cannot separate out the separate transmitted symbols from this combination. Broadly speaking PSP processing, which is for channel equalisation rather than for decoding, models a channel as a convolution with Markovian properties so that a state of the channel is defined by symbols previously received through the channel, and can be described on a trellis. A modulation scheme with an alphabet size M is represented on the trellis as a path from one vertex to any one of M other vertices. The total number of trellis states is $M^{L-1}$ where L is the number of channel taps for delay elements for the channel convolution. A channel is thus represented by a set of L complex numbers. We will describe trellises which are constructed differently to this arrangement.

Broadly speaking the problem which the present invention addresses is that of estimating $\mathbf{H}_k$ and $\mathbf{c}_k$ where only an initial estimate, or no estimate is available. Broadly speaking this is done by extrapolating from a known or assumed initial state on the basis that a channel does not change randomly but follows a path, as illustrated in Figure 3b. This path may represent an evolution of the channel in the time-domain, as discussed with reference to Figure 3, or it may represent an evolution in the frequency domain, for example where a channel estimate from an OFDM preamble or pilot tone at one frequency is extrapolated to determine channel responses at others of the OFDM frequencies. In OFDM, for example IEEE 802.11 a, a channel may be assumed to be approximately stationary in the time domain since a frame size is generally much less than the coherence time of a channel. It will further be appreciated from the description of the invention, that in some OFDM embodiments a pilot tone rather than a preamble sequence may be employed to determine an initial channel estimate for extrapolation.

It will be seen from the above that there is a need for an algorithm which can satisfactorily cope with the situation where a receive antenna receives signals from a plurality of transmit antennas. A Kalman filter is a technique which, in principle, could be employed for jointly estimating both transmitted code words and channel responses. However a Kalman filter cannot be applied to an equation with the form of equation 6. It has been recognised, however, that the form of equation 6 can be changed, broadly speaking by writing $\mathbf{c}_k$ as a matrix (equation 17 below) and by writing $\mathbf{H}_k$ as a vector (equation 18 below).

As the skilled person will understand, a Kalman filter is essentially an algorithm and thus the term "bank of filters" used later is merely a convenient shorthand for referring to a plurality of such algorithms, which may be operated either in parallel or sequentially or on some other basis, for example time-multiplexed. A Kalman filter operates on input data to produce a prediction. There are two types of predictions, a so-called prior estimate, made before a measurement, and a posterior estimate, which comprises a weighted modification of a prior estimate which takes account of the influence of a measurement, and is thus made after observing a signal. A Kalman filter is an optimal Bayesian recursive estimator, as will be described in more detail below. Broadly speaking a Kalman filter operates with a probability density function which is evolved, for example over frequency or time. A Kalman filter assumes a Gaussian distribution, which can be completely represented by just two variables, and thus allows the derivation of a set of closed equations, simplifying the prediction process. The invention will be specifically described with reference to the use of Kalman filters but it is possible to employ other related prediction procedures, such as particle filters which, broadly speaking, employ a numerical point-by-point description of a probability density function which is evolved using numerical procedures.

Broadly speaking a Kalman filter has two alternative stages, a prediction stage, prior to a measurement, and an update stage, following a measurement. It has been recognised, however, that exponential increasing complexity of this process, and also phase ambiguities, may be avoided by introducing an additional decision step between the prediction and update steps. Furthermore the inventor has recognised here that the Kalman filter technique can be applied to the problem represented by equation 6 by focussing on estimating the channel responses rather than by estimating the code words, which would be a conventional application of a Kalman filter. Thus, broadly speaking the technique which will be described below assumes that a code word is known in order to estimate a channel, and then relaxes this constraint to estimate the codeword, in effect a joint channel and code word estimation procedure being employed. In simplified terms the code word $\mathbf{c}_k$ is used to determine $\mathbf{H}_k$ and then $\mathbf{H}_k$ is used to estimate $\mathbf{c}_k$. Furthermore, because there is a plurality of hypotheses associated with states of the coding machine a plurality or "bank" of Kalman filters should be employed.

Kalman filter tracking of a space-time block coded system has been described in Z. Liu, X. Ma, and G. Giannakis, "Space-time coding and Kalman filtering for time selective fading channels," IEEE Transactions on Communications, vol. 50, no. 2, pp. 183-186, 2002. Furthermore an attempt has been made to jointly estimate and decode space-time trellis codes, described in J. Zhang and P. Djuric, "Joint estimation and decoding of space-time trellis codes," EURASIP Journal on Applied Signal Processing, vol. 2002, no. 3, pp. 305-315, 2002. However the approach of Zhang et al. fails to solve the problem except where the code vector sequence set is specially chosen since there are multiple possible solutions for each observation, giving rise to phase ambiguity and, in effect, preventing complete estimation of the channels and code words. The approach of Zhang et al. is also very computationally expensive. Moreover the method described by Zhang et al. only works with differential data encoding and, since error propagation is very likely, can be expected to have much poorer performance.

The present invention addresses this problem of joint code word and channel estimation. The invention also has applications where conventional channel estimation techniques are inadequate, for example where a channel changes faster than can be followed by periodically inserted pilot or training sequences.

According to the present invention there is therefore provided a method of decoding a signal transmitted from a plurality of transmit antennas and received by at least one receive antenna, the transmitted signal comprising a codeword vector $\mathbf{c}$ having elements $c_1$ to $c_{NT}$ where NT is the number of transmit antennas, elements $c_1$ to $c_{NT}$ denoting respective symbols transmitted from each transmit antenna, the codeword c being generated by a coding machine operating on input data symbols and having a finite plurality of states, said coding machine having a set of allowed transitions between said states, transitions of said machine being determined by a sequence of said input data symbols, a set of channel responses describing the response of each channel between a said transmit antenna and said at least one receive antenna, the signal received at said at least one receive antenna comprising a combination of the signals transmitted from each transmit antenna, each transmitted signal being modified by a respective one of said set of channel responses, the method comprising determining an initial estimate for said set of channel responses and selecting an assumed initial state of said coding machine; extrapolating from said initial estimate and state using said received signal to determine a set of estimated transmitted codewords and associated sets of channel responses, each estimated codeword having an associated estimated set of channel responses; and determining an estimated input data symbol sequence from said set of estimated transmitted codewords to decode said received signal; and wherein said extrapolating comprises a plurality of iterations, each iteration comprising establishing a set of allowed transitions from each possible state of said coding machine at a said iteration to each allowed new state of said coding machine for a next iteration; selecting, for each allowed new state of said coding machine with a plurality of allowed transitions to the new state, one of said plurality of transitions by estimating a set of channel responses for each said allowed transition and comparing, for each said allowed transition, said received signal to a codeword associated with the transition modified by said estimated set of channel responses associated with the transition; and then updating the estimated set of channel responses associated with the selected transition using said received signal.

The extrapolation (indexed by *k* in the above introduction) may be performed in either time or frequency, from an initial estimate which may be determined from, for example, a training sequence or which may be some other assumed state, for example an initial estimate of zero. The iterations in effect move along a trellis which, for example, has been predetermined (for example when deciding upon a data structure for the trellis) to establish the set of allowed transitions, points on the trellis in effect defining states of the encoding machine, these states being indexed by time or frequency. Paths within the trellis are associated with hypotheses about the response of the matrix channel and about the input data leading to a code word. Points in the trellis at which paths merge relate to a choice of hypotheses, the hypotheses relating to a (hidden) state of the coding machine. Where paths merge a decision is taken to retain only one hypothesis, this decision being based upon a Euclidean distance criterion. Preferably when such a choice is made history information about the choice is also retained in association with the relevant point within the trellis. In a preferred embodiment this history information comprises the information using which the decision was made, for example the Euclidean distance metric, or some other value which encodes information upon which the decision was based. In this way decisions relating to the selection of subsequent paths can take into account "the goodness of fit" of previous elements of the path. At the end of the trellis the final decision thus identifies a path through the trellis and hence a complete sequence of code words and thus also input data to the coding machine. With such an approach effective selection of an initial state may conveniently be made by associating undesirable, for example large, history values with all the initial states except for the desired one.

In effect a (Kalman filter) process determines estimated channel responses associated with a postulated transition of states of the coding machine, and then updating the estimated set of channel responses using information from the received signal.

Thus in another aspect the invention provides a method of determining sequences of states and associated channel responses for decoding a trellis coded signal transmitted from multiple transmit antennas to one or more receive antennas by jointly estimating codewords of the trellis code and responses of the channels between the transmit antennas and the one or more receive antennas, the method comprising determining an initial channel estimate; determining a set of channel response predictions from said initial channel estimate using a plurality of Kalman filters or recursive Bayesian estimators; selecting, using said channel response predictions, a single hypothesis, corresponding to a trellis path element and representing a possible sequence of states in a trellis of said trellis coded signal and a codeword and a set of channel responses, where a plurality of such hypotheses are available corresponding to converging trellis path elements; and updating said channel response predictions responsive to the result of said selecting; and repeating said selecting and updating steps to extend a plurality of possible paths through said trellis each path representing a sequence of states and codewords and associated channel responses.

In more mathematical terms the invention provides a method of estimating a sequence of a trellis code modulation (TCM) codewords transmitted from a plurality of transmit antennas to at least one receive antenna, each codeword $\mathbf{c}_k$ comprising a vector of symbols one for transmission from each transmit antenna and having an index $k$, estimated channel responses between the transmit antennas and the receive antenna or antennas being described by

$$\mathbf{h}_k = vec\{\mathbf{H}_k^T\}$$

where

$$\mathbf{H}_k = \begin{bmatrix} \lambda_{1,1}^{(k)} & \lambda_{1,2}^{(k)} & \cdots & \lambda_{1,N_T}^{(k)} \\ \lambda_{2,1}^{(k)} & \lambda_{2,2}^{(k)} & \cdots & \lambda_{2,N_T}^{(k)} \\ \vdots & \vdots & \ddots & \vdots \\ \lambda_{N_R,1}^{(k)} & \lambda_{N_R,2}^{(k)} & \cdots & \lambda_{N_R,N_T}^{(k)} \end{bmatrix}$$

and $\lambda_{m,n}^{(k)}$ represents the estimated frequency response of a channel between the nth transmit and mth receive antenna and wherein $N_R$ and $N_T$ are integers representing the number of receive and transmit antennas respectively, the method comprising determining an initial estimated value $\mathbf{h}_0$; and evolving said initial estimated value $\mathbf{h}_0$ to estimate said sequence of codewords; wherein said evolving comprises (i) determining a set of estimates $\mathbf{h}^{(i,j)}$ for a $k+1$th iteration of said evolving based on a $k^{th}$ iteration estimate $\mathbf{h}_k^{(i)}$, where i and j label possible states of a coding machine for generating the sequence of TCM codewords at iterations $k$ and $k+1$ respectively; (ii) selecting, for each said jth possible state, a value for

$$\mathbf{C}_{k+1} = \begin{bmatrix} \mathbf{c}_{k+1}^T & \mathbf{0}^T & \cdots & \mathbf{0}^T \\ \mathbf{0}^T & \mathbf{c}_{k+1}^T & \cdots & \mathbf{0}^T \\ \vdots & \vdots & \ddots & \vdots \\ \mathbf{0}^T & \mathbf{0}^T & \cdots & \mathbf{c}_{k+1}^T \end{bmatrix}$$

by selecting a value for $\mathbf{C}_{k+1}$ which minimises the sum of a distance criterion between a received signal vector $y_k = [x_1^{(k)}...x_i^{(k)}...x_{NR}^{(k)}]^T$ where $x_i^{(k)}$ denotes a signal with index k received at the ith receive antenna and an estimate $\mathbf{C}^{(i,j)}\mathbf{h}^{(i,j)}$ where

$$\mathbf{C}^{(i,j)} = \begin{bmatrix} \mathbf{c}^{(i,j)T} & \mathbf{0}^T & \cdots & \mathbf{0}^T \\ \mathbf{0}^T & \mathbf{c}^{(i,j)T} & \cdots & \mathbf{0}^T \\ \vdots & \vdots & \ddots & \vdots \\ \mathbf{0}^T & \mathbf{0}^T & \cdots & \mathbf{c}^{(i,j)T} \end{bmatrix}$$

and $\mathbf{c}^{(i,j)}$ represents a codeword generated by a transition from a state i to a state j of the coding machine and of a history value $\psi_k^{(i)}$ associated with each state i; (iii) determining an updated set of history values $\psi_{k+1}^{(j)}$ for each state j based upon the result of said selecting step (ii); (iv) determining an estimated value for $\mathbf{h}_{k+1}^{(j)}$ using the selected value for $\mathbf{C}_{k+1}$; and (v) repeating steps (i) to (iv) using the $k + 1^{th}$ iteration estimate of $\mathbf{h}^{(j)}$ in place of the $k^{th}$ iteration estimate to determine a sequence of values for $\mathbf{C}$ and hence a sequence of codewords $\mathbf{c}$.

The invention also provides a method of determining sequences of states and associated channel responses for decoding a trellis coded signal transmitted from multiple transmit antennas to one or more receive antennas by jointly estimating codewords of the trellis code and responses of the channels between the transmit antennas and the one or more receive antennas, the method comprising constructing a trellis comprising paths representing possible sequences of states of the trellis coded signal, said paths being associated with codewords of the trellis code and responses of the channels, by evolving a plurality of Kalman filters to jointly estimate said codewords and channel responses, wherein said trellis is constructed such that there is no more than one path into each node of the trellis.

The invention further provides a data structure comprising such a trellis. Preferably the data structure of the trellis encodes allowed transitions between states of the coding machine at the transmitter. Preferably the data structure includes a history value data structure to associate history value data with each node of the trellis.

As alluded to above when employing the trellis to decode data paths within the trellis may be constructed by forming a plurality of hypotheses concerning a new state of the coding machine based upon an allowed transition of the coding machine from a previously estimated state or states to the new state, each hypothesis comprising a code word denoting the allowed transition and an associated estimated set of channel responses. Where alternative such hypotheses are available for a new state one of these hypotheses is then selected using a decision metric, based upon received data. Broadly speaking a value for a channel estimate vector $\mathbf{h}$ describing a matrix channel response is estimated for a state $k + 1$ given a state at index k, in effect predicting a conditional probability density function. This is performed for each possible state of the coding machine j at index $k + 1$. A value for the code word c and a history value $\psi$ is then determined for each state j at index $k + 1$ using a received value vector $\mathbf{y}$ at index $k$. The prediction for $\mathbf{h}$ at index $k + 1$ is then updated for each state j using a selected code word $\mathbf{c}$ (for each j) at index $k + 1$ and a received value vector $\mathbf{y}$ at index $k + 1$. In practice, with a Gaussian conditional probability density function, such as is assumed for a Kalman filter, the predicting and updating are performed with variables specifying the conditional probability density function, in particular for a Gaussian PDF predicting and updating the mean (which corresponds to $\mathbf{h}$) and covariance of the Gaussian PDF. It should be remembered that, broadly speaking, a trellis provides a way of selecting a sequence of states and that therefore until an end point is defined references to a "current" state and to a "new" state refer to possible states which have yet to be selected although, roughly speaking, one aspect of the invention relates to a way of reducing the number of possible transitions within the trellis to consider by making decisions at stages within the trellis where two (or more) paths converge.

Expressed in another way we will describe a technique which uses only a few or one pilot frequency tone ("semi-blind") or no pilot tone ("blind") to decode and estimate an entire data frame including necessary channel state information estimates. In the case of OFDM systems such pilot tones are already incorporated to correct for residual phase estimation errors (in addition to training sequences). In a blind scheme even a partial knowledge of the channels is not needed. Broadly speaking an initial channel estimate (or other initialisation value) is passed to a bank of recursive Bayesian estimators (Kalman filters) each associated with a single hypothesis (or, equivalently, with a node of the trellis) which represents a possible sequence of states in the space-time code trellis (and hence uniquely represents a possible data sequence) and with it a possible sequence of MIMO channel realisations (estimates). At each time (or frequency) instant the Kalman filters produce a set of MIMO channel predictions for the next time (or frequency) instant. These predictions are exchanged between the Kalman filters and used to calculate a surviving hypothesis and to update the channel predictions. In conceptual structural terms the bank of Kalman filters is coupled to Viterbi-type decoders which produce tentative decisions based upon Kalman channelled predictions and, in return, these tentative decisions are employed by the Kalman filters to update and track the MIMO channels corresponding to the N hypothesis where N is the number of Kalman filters.

The invention also provides received signal decoders configured to operate in accordance with the above-

EP 1 863 241 A2

described methods.

In a further aspect the invention provides a decoder for decoding a signal transmitted from a plurality of transmit antennas and received by at least one receive antenna, the transmitted signal comprising a codeword vector c having elements $c_1$ to $c_{NT}$ where NT is the number of transmit antennas, elements $c_1$ to $c_{NT}$ denoting respective symbols transmitted from each transmit antenna, the codeword c being generated by a coding machine operating on input data symbols and having a finite plurality of states, said coding machine having a set of allowed transitions between said states, transitions of said machine being determined by a sequence of said input data symbols, a set of channel responses describing the response of each channel between a said transmit antenna and said at least one receive antenna, the signal received at said at least one receive antenna comprising a combination of the signals transmitted from each transmit antenna, each transmitted signal being modified by a respective one of said set of channel responses; the decoder comprising means for determining an initial estimate for said set of channel responses and for selecting an assumed initial state of said coding machine; means for extrapolating from said initial estimate and state using said received signal to determine a set of estimated transmitted codewords and associated sets of channel responses; each estimated codeword having an associated estimated set of channel responses; and means for determining an estimated input data symbol sequence from said set of estimated transmitted codewords to decode said received signal; and wherein said means for extrapolating is configured to perform a plurality of iterations and further comprises means for establishing a set of allowed transitions from each possible state of said coding machine at a said iteration to each allowed new state of said coding machine for a next iteration; means for selecting, for each allowed new state of said coding machine with a plurality of allowed transitions to the new state, one of said plurality of transitions by estimating a set of channel responses for each said allowed transition and comparing, for each said allowed transition, said received signal to a codeword associated with the transition modified by said estimated set of channel responses associated with the transition; and means for updating the estimated set of channel responses associated with the selected transition using said received signal.

Preferably the decoder includes means for allocating history values to each possible state of the coding machine at each iteration, to allow a measure of a "goodness of fit" of a selected path or hypothesis to be stored for use in selecting a subsequent segment of path or hypothesis.

The above-described methods and decoders may be employed with a single received antenna or, for greater diversity, with a plurality of receive antennas, without significantly greater decoder complexity or memory requirements. Thus the basic principle of separating signals received from different transmit antennas over different channels provides some advantages with a single receive antenna but potentially improved performance with a MIMO system.

The skilled person will recognise that the above-described decoders, data structures, and methods may be embodied as processor control code, for example on a carrier medium such as a disk, CD- or DVD-ROM, programmed memory such as read-only memory (Firmware) or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional program code, or micro-code, or, for example, code for setting up or controlling an ASIC or FPGA. Similarly the code may comprise code for a hardware description language such as Verilog (Trade Mark) or VHDL (Very high speed integrated circuit Hardware Description Language). As the skilled person will appreciate, the code may be distributed between a plurality of coupled components in communication with one another.

These and other aspects of the invention will now be further described, by way of example only, with reference to the accompanying figures in which:

Figures 1a and 1b show, respectively, an OFDM signal, and an example of a conventional single-input single-output OFDM communication system;

Figures 2a and 2b show respectively, an rf front end and a received signal processor of an OFDM receiver;

Figures 3a to 3d show, respectively, a MIMO space-time coded communications system, time variation of an exemplary response of one channel of this communications system, a conventional data frame with periodic pilot sequences, and a data frame for an embodiment of the invention;

Figure 4 shows a space-frequency coded MIMO-OFDM communications system;

Figure 5 shows a coding and modulation system for a space-time/frequency coded transmitter;

Figure 6 shows a trellis representation of an algorithm for decoding a four state BPSK trellis code;

Figure 7 shows an example of an orthogonal OFDM training sequence for determining an initial matrix channel estimate in a space-frequency coded system with two transmit antennas;

Figure 8 shows a flow diagram of a joint semi-blind detection and channel estimation algorithm;

Figure 9 shows a receiver incorporating a decoder configured to operate in accordance with an embodiment of the present invention;

Figure 10 shows channel impulse response estimation and tracking in the frequency domain determined by an algorithm according to an embodiment of the present invention compared with true channel state information (CSI) and estimation by training;

Figure 11 shows frame error rate performance of blind and semi-blind estimation algorithms according to embodiments of the present invention compared with a trained algorithm;

Figure 12 shows ensemble-averaged mean squared channel estimate error performance of blind and semi-blind estimation algorithms according to embodiments of the present invention compared with a trained algorithm;

Figure 13 shows the frame Error Rate performance of space-time coding enhanced Digital-AMPS (IS-136) versus Doppler frequency, comparing blind and semi-blind estimation algorithms according to embodiments of the present invention with a trained algorithm;

Figure 14 shows Frame Error Rate (FER) performance of space-time coding enhanced Digital-AMPS (IS-136) versus signal-to-noise ratio at a Doppler frequency of 120Hz, comparing blind and semi-blind estimation algorithms according to embodiments of the present invention with a trained algorithm;

Figure 15 shows amplitude tracking versus consecutive 4-PSK data symbols over one frame at a Doppler frequency of 500Hz, using a semi-blind estimation algorithms according to an embodiment of the present invention; and

Figure 16 shows phase tracking versus consecutive 4-PSK data symbols over one frame at a Doppler frequency of 500Hz, using a semi-blind estimation algorithms according to an embodiment of the present invention.

It is helpful to review the recursive Bayesian estimation techniques that used to develop an algorithm for recursive channel estimation in space-frequency and space-time trellis coded systems. It will be shown an initial estimate $\hat{H}_0$ suffices to estimate $\{\hat{H}_{1:K}\}$ and to decode the space-frequency or space-time coded code words.

In Bayesian estimation some statistical estimation knowledge about the estimated data or parameters is assumed to be available before the actual measurements take place. This knowledge is expressed in a form of a joint *a priori* probability density function. A decision can even be made before a measurement, for example on a mean or a mode of the *a priori* density. In recursive estimation it is assumed that the estimated problem evolves (typically in time, but here it is the time or frequency domain) and it is logical to make decisions sequentially.

A random variable $\mathbf{h}_k$ where $k$ is an integer is modelled as a Markovian process (ie. dependent on only a single previous observation rather than on a history of observations), as shown in Equation (8) below, the notation f(a|b) referring to a conditional (probability density) function for 'a' given 'b'. Later the matrix channel estimate will be represented by $\mathbf{h}_k$. The $\mathbf{h}_k$ may be referred to as (hidden) states but these should not be confused with states of the coding machine 504 of Figure 5.

$$f\left(\mathbf{h}_k \middle| \mathbf{h}_{k-1}, \ldots, \mathbf{h}_0, \mathbf{y}_1, \ldots, \mathbf{y}_k\right) = f\left(\mathbf{h}_k \middle| \mathbf{h}_{k-1}\right) \qquad \text{Equation 8}$$

In a Bayesian framework an initial distribution $f(\mathbf{h}_o)$ is also specified.

At a frequency or time index $k$ the joint posterior distribution is given by Bayes' theorem:

$$f\left(\mathbf{h}_{0:k}\middle|\mathbf{y}_{1:k}\right) = \frac{f\left(\mathbf{y}_{1:k}\middle|\mathbf{h}_{0:k}\right)f\left(\mathbf{h}_{0:k}\right)}{\int f\left(\mathbf{y}_{1:k}\middle|\mathbf{h}_{0:k}\right)f\left(\mathbf{h}_{0:k}\right)d\mathbf{h}_{0:k}} \qquad \text{Equation 9}$$

The problem amounts to finding a transform $f(\mathbf{h}_{0:k+1}|\mathbf{y}_{0:k+1})= \Phi\{f(\mathbf{h}_{0:k}|\mathbf{y}_{0:k})\}$. To find the required transform $\Phi$ Bayes' theorem is invoked.

$$\begin{aligned} f\left(\mathbf{h}_{0:k+1}\middle|\mathbf{y}_{1:k+1}\right) &= f\left(\mathbf{h}_{0:k+1}\middle|\mathbf{y}_{k+1},\mathbf{y}_{1:k}\right) = \\ &\frac{f\left(\mathbf{y}_{k+1}\middle|\mathbf{h}_{0:k+1},\mathbf{y}_{1:k}\right)f\left(\mathbf{h}_{0:k+1}\middle|\mathbf{y}_{1:k}\right)}{f\left(\mathbf{y}_{k+1}\middle|\mathbf{y}_{1:k}\right)} \end{aligned} \qquad \text{Equation 10}$$

However, the observations are conditionally independent:
$f(\mathbf{y}_{k+1}|\mathbf{h}_{0:k+1},\mathbf{y}_{1:k})=f(\mathbf{y}_{k+1}|\mathbf{h}_{0:k+1})$. This leads to the recursive formula:

$$f\left(\mathbf{h}_{0:k+1}\middle|\mathbf{y}_{1:k+1}\right) = \frac{f\left(\mathbf{y}_{k+1}\middle|\mathbf{h}_{0:k+1}\right)f\left(\mathbf{h}_{0:k+1}\middle|\mathbf{y}_{1:k}\right)}{f\left(\mathbf{y}_{k+1}\middle|\mathbf{y}_{1:k}\right)} \qquad \text{Equation 11}$$

The above step updates the prior density $f(\mathbf{h}_{0:k+1}|\mathbf{y}_{1:k})$ once the measurements $y_{K+1}$ become available. To complete the recursions the prior density has to be specified. This is known as a prediction step:

$$f\left(\mathbf{h}_{0:k+1}\middle|\mathbf{y}_{1:k}\right) = \int f\left(\mathbf{h}_{k+1}\middle|\mathbf{h}_{k}\right)f\left(\mathbf{h}_{k}\middle|\mathbf{y}_{0:k}\right)d\mathbf{h}_{k} \qquad \text{Equation 12}$$

With a constraint of (8) and an additional constraint that the observations are independently and identically distributed (iid) conditioned on the current state:
$f(\mathbf{y}_k|\mathbf{h}_0...,\mathbf{h}_k,\mathbf{y}_1,...,\mathbf{y}_{k-1},)=f(\mathbf{y}_k|\mathbf{h}_k)$ the marginal distributions $f(\mathbf{h}_{k+1}|\mathbf{y}_{1:k})$ and $f(\mathbf{h}_k|\mathbf{y}_{1:k})$ follow the same recursions.
Equations (11) and (12) constitute a backbone for Bayesian recursive estimation. Deceptively, the above recursions are straightforward to perform. However, the integrals involved are in general too difficult to compute. An exception is the case when the states evolve according to some linear function and both the state and the observation are Gaussian, which are the assumptions by the Kalman filter algorithm.
It is known that the Kalman filter is an optimal Bayesian recursive estimator when both the state transitions and observation systems are linear and both the state and the observation noise are Gaussian. The Kalman filter performs the recursions from the pervious section but needs a certain form of problem as set out in equation (13) to (16) below.
To apply a Kalman filter the estimated state h*k* should evolve according to:

$$\mathbf{h}_{k+1} = \mathbf{A}_{k+1}\mathbf{h}_{k} + \mathbf{w}_{k+1} \qquad \text{Equation 13}$$

and the observed signal is given by:

$$\mathbf{y}_{k+1} = \mathbf{C}_{k+1}\mathbf{h}_{k+1} + \mathbf{v}_{k+1} \qquad\qquad \text{Equation 14}$$

where the state noise w$k$ and the observation noise $\mathbf{V}k$ are distributed according to:

$$f\mathbf{w}_k \sim N(0,\mathbf{Q}) \qquad\qquad \text{Equation 15}$$

$$f\mathbf{v}_k \sim N(0,\mathbf{R}) \qquad\qquad \text{Equation 16}$$

where $N(\mu,P)$ defines a Gaussian with mean $\mu$ and covariance P.

Equations (13, 14, 15, 16) imply that the estimated process evolves sequentially and constitutes what is known as a Gauss-Markov random process.

It has been recognised that a Kalman filter can be used to solve the problem represented by equation (6) by defining new variables $\mathbf{C}_k$ and $\mathbf{h}_k$ by defining new variables $\mathbf{C}_k$ and $\mathbf{h}_k$ as set out in equations 17 and 18 below. In effect redefining the code word $\mathbf{c}_k$ as a matrix and redefining the matrix channel response as a vector. The notation of equation (18) refers to taking each successive row of matrix $\mathbf{H}_k{}^T$ and writing the rows in sequence as a vector.

$$\mathbf{C}_k = \begin{bmatrix} \mathbf{c}_k^T & \mathbf{0}^T & \cdots & \mathbf{0}^T \\ \mathbf{0}^T & \mathbf{c}_k^T & \cdots & \mathbf{0}^T \\ \vdots & \vdots & \ddots & \vdots \\ \mathbf{0}^T & \mathbf{0}^T & \cdots & \mathbf{c}_k^T \end{bmatrix} \qquad\qquad \text{Equation 17}$$

$$\mathbf{h}_k = vec\{\mathbf{H}_k^T\} \qquad\qquad \text{Equation 18}$$

The Kalman filter can then be applied by performing alternating steps of prediction and update, as set out below.

<u>Prediction</u>: Suppose that the random variable $\mathbf{h}_k$ conditioned on the observations $\mathbf{y}_{1:k}$ (where $k$ indexes time or Frequency), is Gaussian:

$$f(\mathbf{h}_k|\mathbf{y}_{1:k}) = N(\mu_k,\mathbf{P}_k) \qquad\qquad \text{Equation 19}$$

From equation (13) it can be deduced that $f(\mathbf{h}_{k+1}|\mathbf{h}_k) = N(\mathbf{Ah}_k,\mathbf{Q})$ . Then from equation (12) the predictive marginal distribution is given by

$$f(\mathbf{h}_{k+1}|\mathbf{y}_{1:k}) = \int N(\mathbf{Ah}_k,\mathbf{Q})N(\mu_k,\mathbf{P}_k)d\mathbf{h}_k \qquad\qquad \text{Equation 20}$$

After algebraic manipulations involving expanding the two Gaussian densities, completing the square and integrating this becomes:

$$f\left(\mathbf{h}_{k+1}|\mathbf{y}_{1:k}\right)=N\left(\mathbf{A}\mu_k,\mathbf{Q}+\mathbf{A}\mathbf{P}_k\mathbf{A}^H\right)$$   Equation 21

The following definitions are then made: $\mu_{k+1|k}=\mathbf{A}\mu_k$ and $\mathbf{P}_{k+1|k}=\mathbf{Q}+\mathbf{A}\mathbf{P}_k\mathbf{A}$. The predictive density is then defined by:

$$f\left(\mathbf{h}_{k+1}|\mathbf{y}_{1:k}\right)=N\left(\mu_{k+1},\mathbf{P}_{k+1|k}\right)$$   Equation 22

Update: Using (22) and (16) the update formula of (11) can be specified as:

$$f\left(\mathbf{h}_{k+1}|\mathbf{y}_{1:k+1}\right)=\frac{N\left(\mathbf{C}_{k+1}\mathbf{h}_{k+1},\mathbf{R}\right)N\left(\mu_{k+1},\mathbf{P}_{k+1|k}\right)}{f\left(\mathbf{y}_{k+1}|\mathbf{y}_{1:k}\right)}$$   Equation 23

After algebraic manipulation the posterior marginal density becomes

$$f\left(\mathbf{h}_{k+1}|\mathbf{y}_{1:k+1}\right)=N\left(\mu_{k+1},\mathbf{P}_{k+1}\right)$$   Equation 24

with the following notation:

$$\begin{aligned}\mathbf{P}_{k+1}&=\left[\mathbf{I}-\mathbf{K}_{k+1}\mathbf{C}_{k+1}\right]\mathbf{P}_{k+1|k}\\\mu_{k+1}&=\mu_{k+1|k}+\mathbf{K}_{k+1}\left[\mathbf{y}_{k+1}-\mathbf{C}_{k+1}\mu_{k+1|k}\right]\\\mathbf{K}_{k+1}&=\mathbf{P}_{k+1|k}\mathbf{C}_{k+1}^H\left[\mathbf{R}+\mathbf{C}_{k+1}\mathbf{P}_{k+1|k}\mathbf{C}_{k+1}^H\right]^{-1}\end{aligned}$$   Equation 25

Since both the predictive density $f(\mathbf{h}_{k+1}|\mathbf{y}_{1:k})$ and the up-dated posterior density $f(\mathbf{h}_{k+1}|\mathbf{y}_{1:k+1})$ are Gaussian the mean and the covariance describes them completely.

An algorithm to jointly estimate transmitted code words and matrix channel responses will now be described in terms of a trellis, with reference to a specific example.

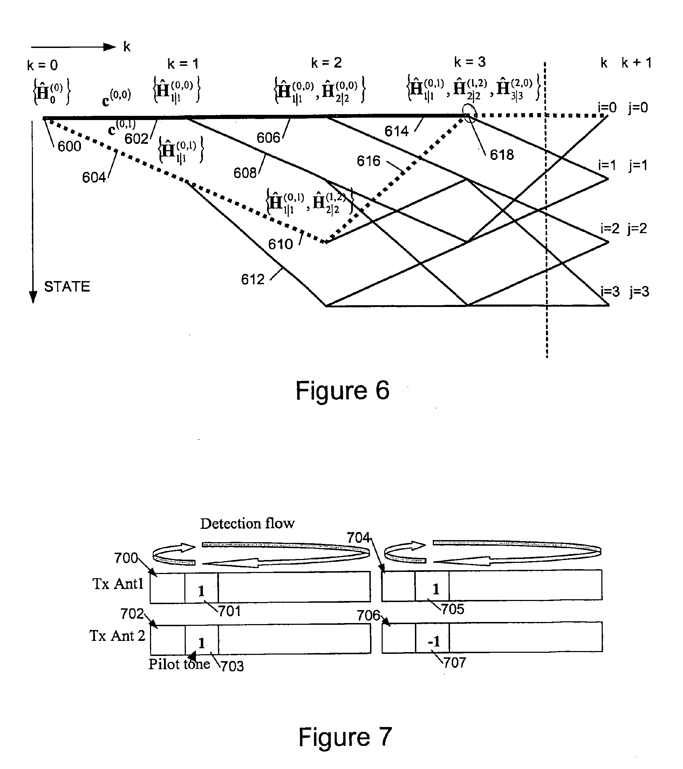

Referring to Figure 6, this shows a trellis representation of a decoding algorithm for decoding four state BPSK (Binary Phase Shift Keying) space-frequency (or space-time) code. In Figure 6 index $k$, which denotes time or frequency, runs from left to right starting at k = 0 and possible states of the encoding machine at the transmitter are represented as points on a vertical axis at each index $k$. These states are arbitrarily labelled 0,1,2,3, state 0 corresponding to an initial state of the coding machine 504 of Figure 5. Possible states at index $k$ are labelled by $i$ and possible states at index k + 1 are labelled by $j$. The labelling of $i$ and $j$ is a matter of convenience, merely requiring determination of a labelling of the states of coding machine 504. Possible, that is allowed, transitions between states of the coding machine are indicated by paths in the trellis. These allowed transitions in effect constrain the trellis structure and may be include within the algorithm when a data structure for representing the trellis is determined. For example a programmer may have knowledge of the trellis code used, and this can be used to define a data structure for the trellis; alternatively a dynamic data structure may be employed. Associated with each path in the trellis between successive values of k is a channel estimate **H** and a code word estimate **c** although for convenience only the channel estimates are shown. In the notation employed in Figure 6 a superscript $(i,j)$ denotes a transition from an $i^{th}$ state to a $j^{th}$ state and $\hat{\mathbf{H}}_{k+1|k}$ denotes a channel estimate for k + 1 given an estimate for k, and $\hat{\mathbf{H}}_{k+1|k+1}$ denotes a posterior estimate, that is for index k + 1 given observation k + 1.

In Figure 6 the trellis starts from an initial coding machine state 600 labelled 0 with an initial channel estimate $\hat{\mathbf{H}}_0$ at index $k$ = 0. From this initial state there are two possible transitions, to coding machine states 0 and 1 respectively, denoted by respective paths 602 and 604. Which transition is in fact made by the coding machine dependent upon the input data sequence to the coding machine and there is a different transmitted code word **c** associated with each transition, and hence with the different alternative input data sequences to the coding machine. Thus in Figure 6 there are respective code words $\mathbf{c}^{(0,0)}$ and $\mathbf{c}^{(1,1)}$ (and hence $\mathbf{C}^{(0,0)}$ and $\mathbf{C}^{(1,1)}$ from Equation 17) associated with paths 602 and 604. Thus at index $k = 1$ there are two possible coding machine states, 0 and 1, and there are two possible transitions from each of these states, as represented by paths 606, 608, 610, 612. At index $k = 2$ all four states of the coding machine are possible and it can be seen that at index $k = 3$, there are two possible paths to each of the four possible states of the coding machine. It will be noted that up to and including $k = 2$ each possible state of the coding machine can only be arrived at via a single possible path - for example, the third state (state 2) can only be arrived at from state 0 via state 1. It will be appreciated that as k increases the number of possible paths to any one possible at index k increases exponentially. The number of paths is therefore reduced by making a decision to select and retain a single path to a state at index k where that state may be arrived at via more than one path, that is from more than one previous state.

Thus, for example, node or vertex 618 at $k = 3$ may be arrived at either via path 614, associated with a first joint code word and channel estimate, or via path 616 associated with a second joint code word and channel estimate. These two paths each represent a separate hypothesis concerning the code word and matrix channel estimate and, at $k = 3$, a decision is made to retain only one of these hypotheses or paths, in the illustrated example a dashed path 616. This corresponds to a sequence (in terms of index k) of (posterior) channel estimates $\hat{\mathbf{H}}^{(0,1)}$, $\hat{\mathbf{H}}^{(1,2)}$, $\hat{\mathbf{H}}^{(2,0)}$ and a corresponding sequence of code word estimates (not shown in Figure 6). This sequence corresponds to a sequence of coding machine transitions from initial state 0 to state 1, to state 2 and back to state 0 at $k = 3$. It can be seen that no decision is needed for the first two transitions on this path since with the example of Figure 6 there is only one way to arrive at state 2 at index $k = 2$. The dashed path 616 is selected on the basis of a metric measuring the closeness of the path to known observations (ie. received signal values) and when a decision is made to select one of the two alternative paths information relating to this metric is retained. This is so that when a subsequent decision must be made between two paths originating from two different respective states, this "history value" can be taken into account as a means of estimating the likelihood of having arrived at each previous state from which the two converting paths originate. Thus a path (or equivalently transition) which is a close fit to observed data may be rejected because it proceeds from a relatively less likely previous state, and vice-versa.

Recapping, each path segment is associated with a jointly estimated code word and matrix channel response and these path segments together define a network of paths which is simplified by retaining only one path where two paths merge (that is meet or converge as k increases). A history value relating to the likelihood of the retained path segment is stored in association with each node of a trellis so that the likelihood of starting from this node can be taken into account when deciding between next path segments. This simplifies the network of paths. The completed trellis (which may be terminated at any desired points) defines a network of possible paths, and hence sequences of possible code words and channel estimates, and one path through the trellis is then selected (for example, based upon history values of the final or end k at states) to choose one path through the trellis, and hence one (most likely) code word sequence and, ultimately, to determine the estimated input data sequence required for the selected (most likely) code word sequence.

In a practical implementation a decision may be made at each index k although, in example of Figure 6, up to $k = 2$ this may simply comprise retaining all possible paths. In practice this may achieved by predetermining history values for a set of initial states so that only the initial estimated state (state 0 in Figure 6) is considered likely. In the example of Figure 6, with a Euclidean distance metric, this could be achieved by setting a large history value (or distance) for states 1, 2 and 3 and a small history value for state 0.

In more mathematical terms, an initial estimate $\hat{\mathbf{H}}_0$ together with a corresponding covariance matrix is propagated to a neighbouring time instant $k$ or, for OFDM, to a neighbouring frequency tone $k$, using Equation 21. The prior channel estimate ($\hat{\mathbf{H}}_{k+1|k}$ and thus $\hat{\mathbf{h}}_{k+1|k}$ via Equation 18) is simply the mean of the predictive density ($\mu_{k+1|k}$) in Equation 21.

In this method it is important that the trellis always starts from a known or defined state, as depicted in Figure 6, where it is assumed that the trellis starts from an initial state zero. As previously mentioned, there are two transitions from this initial state (to state 0 and to state 1), and two corresponding codewords $\mathbf{c}^{(0,0)}$ and $\mathbf{c}^{(0,1)}$ (and corresponding $\mathbf{C}$'s). Using set of Equations 25 the channel estimate, the covariance matrix for the channels, and the Kalman gain matrix are then all updated. Since the $\mathbf{C}^{(i,j)}$ are in general different the update process results in different posterior estimates for the states 0 and 1. In effect a parallel bank of J Kalman filters (or algorithms) is implemented, one for each of the J possible states (or, equivalently, nodes of the trellis) at an index $k+1$.

This procedure continues, and all hypotheses are retained, until the state transitions in the trellis merge ($k=3$ in Figure 6) when a decision is made. The two merging paths correspond to two distinct hypotheses, each with an associated set of codewords $\{\mathbf{c}^{(i,j)}1:k\}$ and a set of channel estimates $\{\hat{\mathbf{H}}^{(i,j)}_{1:k}\}$. Assuming that the Kalman filters track the channels with sufficient accuracy, a decision can be made to retain only one hypothesis using a Euclidean distance criterion such as that defined by Equation 7. For example, in Figure 6 the dashed path 616 (and, in effect, path elements 610 and 604) is retained and with it the channel estimate history $\left\{ \hat{\mathbf{H}}_{1|1}^{(0,1)}, \hat{\mathbf{H}}_{2|2}^{(1,2)}, \hat{\mathbf{H}}_{3|3}^{(2,0)} \right\}$. This is the last estimate in this set that will be used as the prior estimate for all transitions originating from this state. This procedure is repeated for all states and for all time instants $k$ or, for OFDM, frequency tones $k$.

When the trellis is terminated, for example by being forced to return to the zero state, the last decision ie. that taken at zero state, will identify a path, which is assumed to be correct. This identified path also identifies a complete sequence of space-time or space-frequency codewords $\{\mathbf{c}^{(i,j)}{}_{1:K}\}$ and channel estimates $\{\hat{\mathbf{H}}^{(i,j)}{}_{1:K}\}$, although generally only the codewords will be needed.

In a blind embodiment of the algorithm there is no initial training and the initial estimate is set to zero, that is $\hat{\mathbf{H}}_0 = 0$. However better results are obtained with a semi-blind embodiment in which a conventional channel estimation is performed to determine an initial estimate $\hat{\mathbf{H}}_0$ (and thus a initial $\hat{\mathbf{h}}_0$). This initial estimate may be obtained from an initial training sequence or pilot tone such as pilot 332 of Figure 3d (a simple pilot tone rather than a training sequence specifically designed for channel estimation is sufficient) or, in an OFDM system, a standard channel estimation may be performed on one subcarrier. In either case since an orthogonal matrix is preferred for $\hat{\mathbf{H}}_0$ to avoid ambiguity, an orthogonal training sequence is preferred.

Figure 7 shows an example of an orthogonal OFDM training sequence for determining an initial matrix channel estimate $\hat{\mathbf{H}}_0$ in a space-frequency coded system with two transmit antennas. To avoid ambiguity at least two encoded OFDM symbols 700, 704 and 702, 706 (the SFTC code) are sent successively from each antenna. The same frequency (pilot) tone (denoted as $k=0$) 701, 705, 703, 707 is chosen in each OFDM symbol to carry an orthogonal training sequence. Training on this sequence then results in an initial estimate for $\hat{\mathbf{H}}_0$.

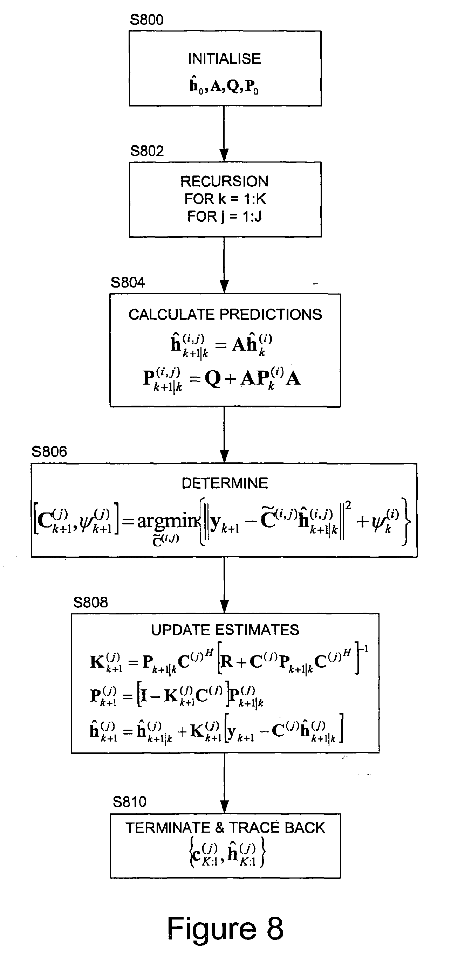

Figure 8 shows a flow diagram of the joint semi-blind detection and channel estimation algorithm. At step S800 the algorithm is initialised by determining values for $\hat{\mathbf{h}}_0$, $\mathbf{A}$, $\mathbf{Q}$, $\mathbf{P}_0$ here $\hat{\mathbf{h}}_0$ is determined via equation (18) from the initial channel estimate $\hat{\mathbf{H}}_0$, $\mathbf{A}$ determines the evolution of the channels in time and can be set equal to $\mathbf{I}$, the identity matrix, this amounting to a random work assumption; $\mathbf{Q}$ relates to the distribution of state noise of the channel estimation process and can be set at some fraction of $\mathbf{I}$ for example $0.05\mathbf{I}$ (the exact value is not crucial); and $\mathbf{P}_0$ is an initial estimate for the covariance of $\hat{\mathbf{H}}_0$, and again this value is of no great consequence as it is quickly updated. An initial value $\mathbf{R}$, the covariance of the observation noise, may also be determined, for example by a measurement of the level of noise.

Following this initialisation the algorithm iterates over a series of index values k from 1 to a maximum value K (in either time or frequency), for each index value k determining and updating predictions for each of J possible coding states. This may termed recursion (in the mathematical sense) and may or may not be implemented by a recursive computer program function. The recursion repeatedly applies steps S804, S806 and S808 to calculate predictions (prior estimates), make decisions, and update estimates (determine posterior estimates) respectively.

At step S804 a prior channel estimate $\hat{\mathbf{h}}$ is determined for index $k + 1$ (states j) given (previously updated) estimates for index k (states labelled by $i$) for each possible (allowed) transition $i$ to $j$. Similarly prior covariance estimates for states $j$ are determined for k + 1 given k (see equation 21). Then, at step S806, a code word sequence is associated with each state $j$ at index $k + 1$ (more correctly a code word matrix via equation 17) by choosing a single path to each state $j$ using the equation shown in step S806. As can be seen from step S806 this involves determining a Euclidean distance metric between a received signal value observation $y_{k+1}$ and an estimate based upon a prior estimate of $\hat{\mathbf{h}}$ and possible code words for the $i^{th}$ to $j^{th}$ state transition $\tilde{\mathbf{C}}^{(i,j)}$.

The structure of the (encoding) code, in effect matrix $\mathbf{G}$ of Equation 4, can be embodied in the decoder as a set of possible state $i$ to state $j$ transitions for use in determining distance metrics for step S806.

Step S806 also determines a history value $\psi_{k+1}$ for each state $j$, which preferably comprises the value within the curly brackets {} of the arg min expression for the selected path to state $j$. Thus the history value $\psi_{k+1}$ includes the history value $\psi_k^{(i)}$ of the state form which the selected transition originates, as well as (ie. summed with) a measure of the Euclidean distance of the selected additional path element from the observation $\mathbf{y}_{k+1}$.

Finally, at step S808, the procedure determines updated values, (ie. posterior estimates) for the Kalman filter gain $\mathbf{K}$ and the channel estimate $\hat{\mathbf{h}}$ and covariance $\mathbf{P}$. The notation of step S808 uses only a single superscript $j$ as only a single path comes to each trellis node and, for clarity omits a second subscript $k + 1$ (strictly speaking the subscripts for $K$, $\hat{\mathbf{h}}$, and $\mathbf{P}$ on the left hand sides of the equations should be "$k + 1|k + 1$").

Following the update of step S808 the procedure loops back to step S804 until the trellis is terminated at $k = K$. Then, at step S810, the final state with the minimum $\psi_K$ is selected and the corresponding (single) path is then traced back through the trellis to yield a sequence of code words $\{\mathbf{c}_{K:1}\}$ from k = K to k =1 and, if desired, a sequence of channel estimates. From the (estimated) sequence of code words it is then straightforward to derive an (estimated) sequence of data input to the coding machine (such as machine 504 of Figure 5) in the transmitter.

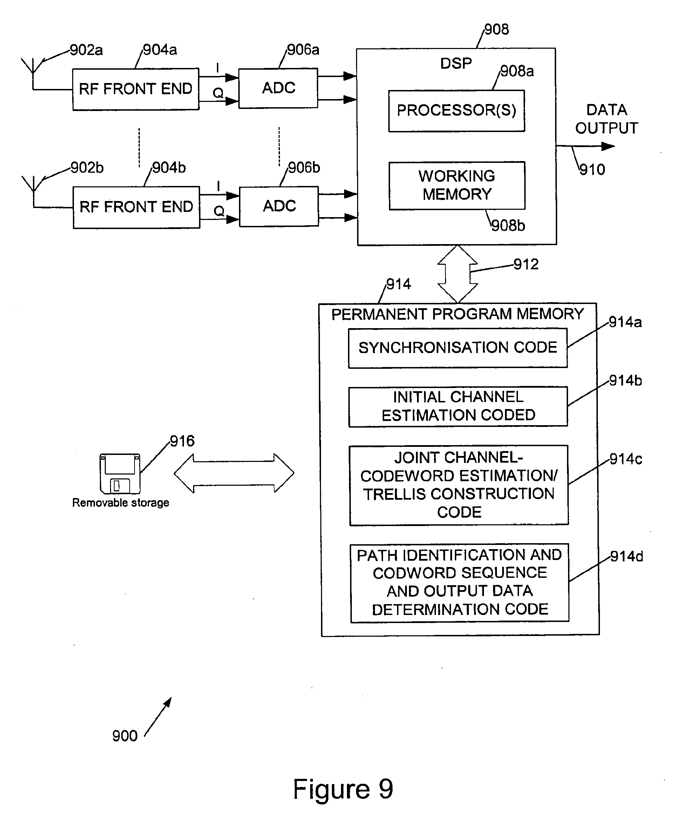

Referring now to Figure 9, this shows a receiver 900 incorporating a decoder configured to operate in accordance with an embodiment of the present invention, and in particular to implement the algorithm of Figure 8. The receiver comprises one or more receive antennas 902a, b (of which two are shown in the illustrated embodiment) each coupled to a respective rf front end 904a, b, for example similar to the rf front end of Figure 2a, and thence to a respective analogue-to-digital converter 906a, b and to a digital signal processor (DSP) 908. DSP 908 will typically include one or more processors 908a and some working memory 908b. The DSP 908 has a data output 910 and an address, data and control bus 912 to couple the DSP to permanent program memory 914 such as flash RAM or ROM. Permanent program memory 914 stores code and optionally data structures or data structure definitions for DSP 908. In particular program memory 914 includes synchronisation code 914a for synchronising to the digitised rf input signals and code 914b, c, d for implementing the algorithm of Figure 8. This code includes initial channel estimation code 914c, code for jointly estimating channel responses and codewords by, in effect, constructing a trellis and code 914d for identifying a path through the trellis and determining a sequence of code words and consequently data for data output 910. Optionally the code in permanent program memory 914 may be provided on a carrier such as an optical or electrical signal carrier or, as illustrated in Figure 9, a floppy disk 916. The data output 910 from DSP 908 is provided to further data processing elements of receiver 900 (not shown in Figure 9) as desired. Typically these may include a block error decoder such as a Reed-Solomon decoder, and a baseband data processor for implementing higher level protocols. Some examples of the performance of embodiments of the invention will now be described, firstly with reference to a space-frequency coded system and then with reference to a space-time coded system.

The technique lends itself to parallel implementation, for example using a bank of DSPs, say one for each Kalman filter. In practice DSP 908 may comprise a plurality of parallel DSPs, for example one for each code state, that is 16 for a 16 state code.

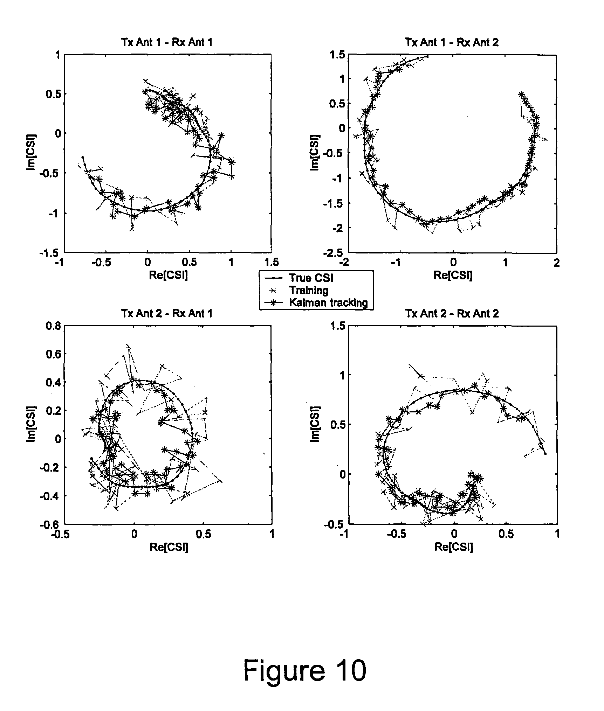

Figures 10, 11 and 12 relate to a simulated MIMO-OFDM system with the 16 state 4-PSK space-time code defined in Baro *et al (ibid),* which code is hereby specifically incorporated by reference, this code being used in this example as space-frequency code. The size of the FFT is 64 (as in IEEE 802.11a) and all available subcarriers are used. There is one (first) trained tone. A frame is constructed from 126 information symbols (2 OFDM symbols) that are encoded to a space-frequency codeword. Together with one pilot in each OFDM symbol, the span is two OFDM symbols.

The pilot tones are placed at the beginning of each OFDM symbol and each OFDM symbol is prefixed with a cyclical prefix of 16 symbols. For simulation purposes a simple channel with $L = 3$ taps is used, all assumed i.i.d. (independently and identically distributed) and complex circular Gaussian with a mean of 0 and a covariance of $(2L)^{-1}$. The channels in the frequency domain are modeled as a random walk, that is $\mathbf{A} = \mathbf{I}$ (the identity matrix) and $\mathbf{Q} = 0.05\mathbf{I}$. The system has two transmit antennas and two receive antennas and a SNR (signal-to-noise ratio) of 15dB per receive antenna is assumed.

In Figures 10 to 12 the performance of the techniques described herein are compared with a trained version of the same architecture. In the trained version, prior to the space-frequency code transmission, training sequences are sent, the training comprising the sequential transmission of preambles (1 OFDM symbol).

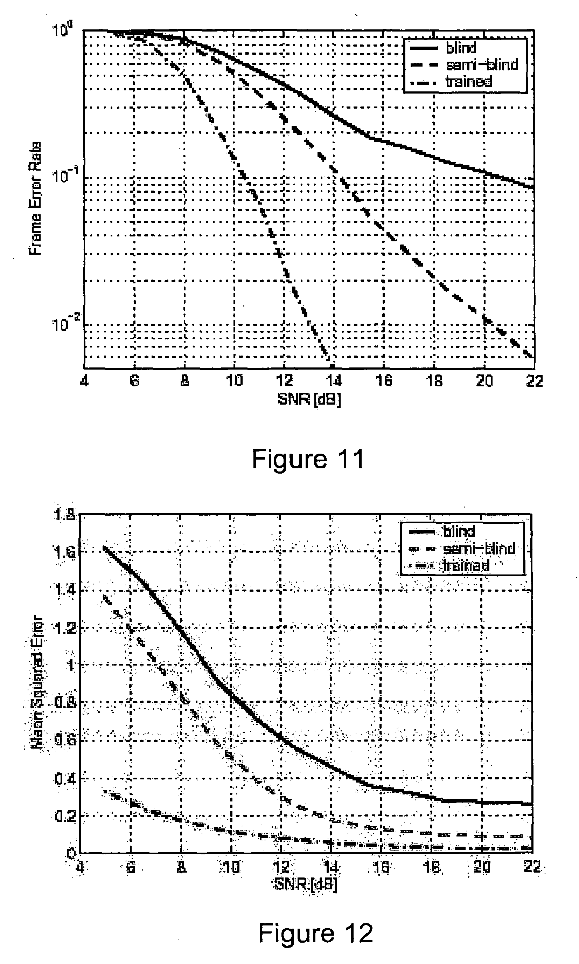

Figure 10 shows channel impulse response estimation and tracking in the frequency domain determined by an algorithm according to an embodiment of the present invention compared with true channel state information (CSI) and estimation by training. Figure 11 shows frame error rate performance of blind and semi-blind estimation algorithms according to embodiments of the present invention compared with a trained algorithm. Figure 12 shows ensemble-averaged mean squared channel estimate error performance of blind and semi-blind estimation algorithms according to embodiments of the present invention compared with a trained algorithm. Here "semi-blind" refers to use of the algorithm with an initial channel estimate and "blind" refers to the above described variant of the algorithm where no initial estimate is used.

It can be seen from Figures 10 to 12 that the described algorithm closely tracks the channel realization although, as expected, both blind and semi-blind techniques loose some diversity gain as compared to the trained technique. At reference point frame error rate (FER) = 10% the gap is 4 dB for semi-blind and 10dB for the blind technique.

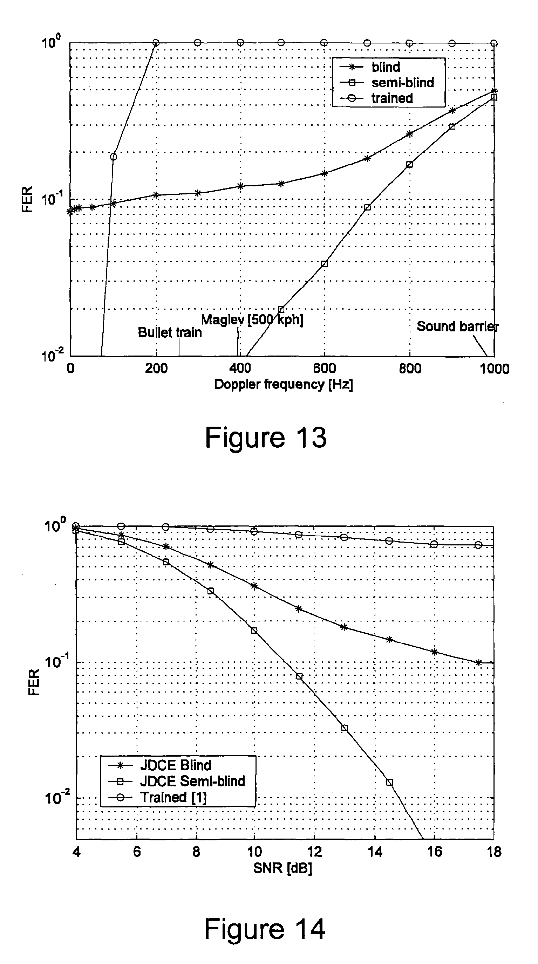

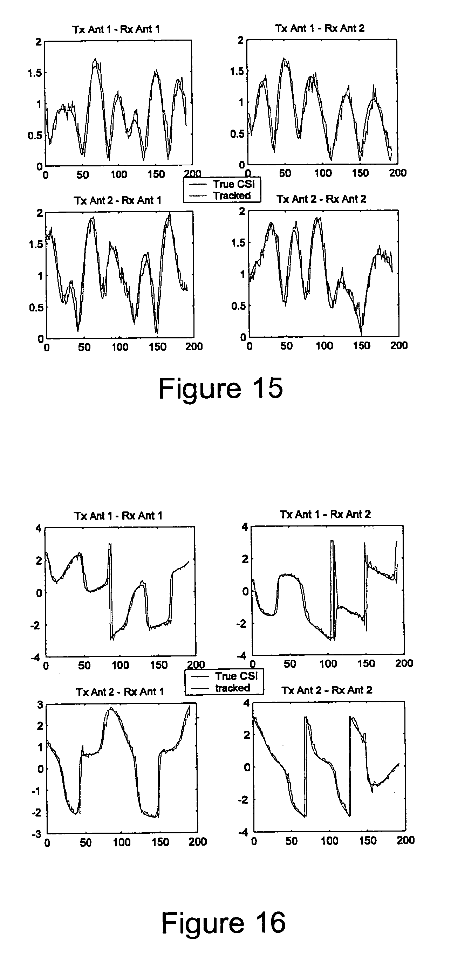

Figures 13 to 16 relate to exemplary space-time encoded systems, Figures 13 and 14 relating to space-time coding enhanced Digital AMPS, and Figures 15 and 16 relating to a MIMO system using a 16 state 4-PSK code with two transmit and two receive antennas.

Figure 13 shows Frame Error Rate (FER) performance of space-time coding enhanced D-AMPS (IS-136) versus Doppler frequency (carrier $f_c$ = 850MHz), comparing blind and semi-blind estimation algorithms according to embodiments of the present invention with a trained algorithm. Here the "trained" technique uses an algorithm similar to that proposed in A. Naguib *et al. (ibid).* The performance of the method described in J. Zhang *et al. (ibid)* is not depicted in Figure 13 as due to phase ambiguity this method fails to work.

Figure 14 shows Frame Error Rate (FER) performance of space-time coding enhanced Digital-AMPS (IS-136) versus SNR (signal-to-noise ratio) at a Doppler frequency of 120Hz (carrier $f_c$ = 850MHz) comparing blind and semi-blind estimation algorithms according to embodiments of the present invention with the same trained algorithm as used for Figure 13.

It will be appreciated that a smaller FER implies better performance and a FER of 1% may be used as a reference point. It can be seen from Figure 13 that only the presently described technique tolerates the Doppler spreads experienced by a space-time coded system traveling at over 500 kph. The performance of the trained technique could be improved by inserting more pilots, but this would significantly degrade the bandwidth efficiency. At high velocities the described technique can offer 100% improvement in system capacity.

Figures 15 and 16 show tracking capabilities of a semi-blind embodiment of the algorithm applied to estimating a time variant MIMO channel. In particular Figure 15 shows amplitude tracking versus consecutive 4-PSK data symbols over one frame at a Doppler frequency of 500Hz, each of the four figures referring to a channel connecting each transmit to each receive antenna. Figure 16 shows phase tracking versus consecutive 4-PSK data symbols under the same conditions, again each of the four figures referring to a channel connecting each transmit to each receive antenna. It can be seen that both the amplitude and phase are tracked very closely even at a Doppler spread of 500Hz, which corresponds to a speed of 635kph.

The described techniques can be used with both space-frequency and space-time coded systems. In space-frequency systems separate training sequences for the tones may be rendered redundant; in space-time coded systems operation at high Doppler spreads is possible without the need to determine the expected Doppler spread before transmission. Generally bandwidth efficiency is improved. The techniques described here may be employed where only a single initial channel estimate is available, a so-called semi-blind mode, or where no initial channel estimate is available, the so-called blind mode. In both cases the entire channel estimate may be recovered and the space-frequency or space-time trellis code decoded. More generally, embodiments of the techniques described herein permit satisfactory system operation where known techniques fail.

Embodiments of the algorithms described above may be employed in systems with a plurality of transmitting sources regardless of the transmission medium itself. For example embodiments of the algorithms may be employed in receivers for rf data communication links, in infra-red based communication systems and also in wired systems such as fibre optic communication systems. The techniques are particularly advantageous for both base and mobile stations of rf communication links. Although reference has been made to IEEE 802.11 the algorithm may also be employed in other data communication links, for example so-called 2.5G, 3G, and 4G mobile communications networks including, but not limited to UMTS (Universal Mobile Telecommunications System) and related systems.

No doubt many other effective alternatives will occur to the skilled person. It will understood that the invention is not limited to the described embodiments and encompasses modifications apparent to those skilled in the art lying within the spirit and scope of the claims appended hereto.

The present invention may also be defined by means of the following numbered clauses:

1. A method of decoding a signal transmitted from a plurality of transmit antennas and received by at least one receive antenna,

the transmitted signal comprising a codeword vector **c** having elements $c_1$ to $c_{NT}$ where NT is the number of transmit antennas, elements $c_1$ to $c_{NT}$ denoting respective symbols transmitted from each transmit antenna, the codeword c being generated by a coding machine operating on input data symbols and having a finite plurality of states, said coding machine having a set of allowed transitions between said states, transitions of said machine being determined by a sequence of said input data symbols,

a set of channel responses describing the response of each channel between a said transmit antenna and said at least one receive antenna,

the signal received at said at least one receive antenna comprising a combination of the signals transmitted from each transmit antenna, each transmitted signal being modified by a respective one of said set of channel responses, the method comprising:

    determining an initial estimate for said set of channel responses and selecting an assumed initial state of said coding machine;

    extrapolating from said initial estimate and state using said received signal to determine a set of estimated transmitted codewords and associated sets of channel responses, each estimated codeword having an associated estimated set of channel responses; and

    determining an estimated input data symbol sequence from said set of estimated transmitted codewords to decode said received signal; and

wherein said extrapolating comprises a plurality of iterations, each iteration comprising:

    establishing a set of allowed transitions from each possible state of said coding machine at a said iteration to each allowed new state of said coding machine for a next iteration;

    selecting, for each allowed new state of said coding machine with a plurality of allowed transitions to the new state, one of said plurality of transitions by estimating a set of channel responses for each said allowed transition and comparing, for each said allowed transition, said received signal to a codeword associated with the transition modified by said estimated set of channel responses associated with the transition; and then

updating,the estimated set of channel responses associated with the selected transition using said received signal.

2. A method as defined in clause 1 wherein a history value is associated with each possible state of said coding machine at a said iteration, and wherein said selecting of one of said plurality of allowed transitions is dependent upon the history values of the possible states from which said allowed transitions come, the method further comprising determining a history value for each said allowed new state of said coding machine for said next iteration.

3. A method as defined in clause 2 wherein said selecting of an assumed initial state of said coding machine comprises allocating history values to possible initial states of said coding machine such that a selected initial state is weighted more heavily than other possible initial states.

4. A method as defined in clause 1, 2 or 3 wherein said initial estimate for said set of channel responses is zero.

5. A method as defined in clause 1, 2 or 3 further comprising determining said initial estimate for said set of channel responses using a known portion of said received signal.

6. A method as defined in any one of clauses 1 to 5 wherein said estimating and updating of channel responses comprise Kalman filtering.

7. A method as defined in any preceding clause for decoding a signal received by a plurality of receive antennas, wherein said set of channel responses describes the response of each channel between a said transmit antenna and a said receive antenna.

8. A method as defined in any one of clauses 1 to 7 wherein said coding machine comprises a space-frequency coding machine and said iterations comprise frequency iterations.

9. A method as defined in any one of clauses 1 to 7 wherein said coding machine comprises a space-time coding machine and said iterations comprise time iterations.

10. A method of determining sequences of states and associated channel responses for decoding a trellis coded signal transmitted from multiple transmit antennas to one or more receive antennas by jointly estimating codewords of the trellis code and responses of the channels between the transmit antennas and the one or more receive antennas, the method comprising:

determining an initial channel estimate;
determining a set of channel response predictions from said initial channel estimate using a plurality of Kalman filters or recursive Bayesian estimators;
selecting, using said channel response predictions, a single hypothesis, corresponding to a trellis path element and representing a possible sequence of states in a trellis of said trellis coded signal and a codeword and a set of channel responses, where a plurality of such hypotheses are available corresponding to converging trellis path elements; and
updating said channel response predictions responsive to the result of said selecting; and
repeating said selecting and updating steps to extend a plurality of possible paths through said trellis each path representing a sequence of states and codewords and associated channel responses.

11. A method as defined in clause 10 wherein each said converging trellis path element extends a trellis path and has an associated metric derived from a previous selecting step representing an accuracy of said trellis path; and wherein said selecting is responsive to the metrics associated with said converging trellis path elements.

12. A method as defined in clause 10 or 11, wherein said trellis coded signal is a space-frequency or space-time trellis coded signal.

13. A method of estimating a sequence of a trellis code modulation (TCM) codewords transmitted from a plurality of transmit antennas to at least one receive antenna, each codeword $\mathbf{c}_k$ comprising a vector of symbols one for transmission from each transmit antenna and having an index $k$, estimated channel responses between the transmit antennas and the receive antenna or antennas being described by

$$\mathbf{h}_k = vec\left\{\mathbf{H}_k^T\right\}$$

where

$$\mathbf{H}_k = \begin{bmatrix} \lambda_{1,1}^{(k)} & \lambda_{1,2}^{(k)} & \cdots & \lambda_{1,N_T}^{(k)} \\ \lambda_{2,1}^{(k)} & \lambda_{2,2}^{(k)} & \cdots & \lambda_{2,N_T}^{(k)} \\ \vdots & \vdots & \ddots & \vdots \\ \lambda_{N_R,1}^{(k)} & \lambda_{N_R,2}^{(k)} & \cdots & \lambda_{N_R,N_T}^{(k)} \end{bmatrix}$$

and $\lambda_{m,n}^{(k)}$ represents the estimated frequency response of a channel between the $n^{th}$ transmit and $m^{th}$ receive antenna and wherein $N_R$ and $N_T$ are integers representing the number of receive and transmit antennas respectively, the method comprising:

determining an initial estimated value $\mathbf{h}_0$; and
evolving said initial estimated value $\mathbf{h}_0$ to estimate said sequence of codewords; wherein said evolving comprises:

(i) determining a set of estimates $\mathbf{h}^{(i,j)}$ for a $k+1^{th}$ iteration of said evolving based on a $k^{th}$ iteration estimate $\mathbf{h}_k^{(i)}$, where i and j label possible states of a coding machine for generating the sequence of TCM codewords at iterations $k$ and $k+1$ respectively;
(ii) selecting, for each said $j^{th}$ possible state, a value for

$$\mathbf{C}_{k+1} = \begin{bmatrix} \mathbf{c}_{k+1}^T & \mathbf{0}^T & \cdots & \mathbf{0}^T \\ \mathbf{0}^T & \mathbf{c}_{k+1}^T & \cdots & \mathbf{0}^T \\ \vdots & \vdots & \ddots & \vdots \\ \mathbf{0}^T & \mathbf{0}^T & \cdots & \mathbf{c}_{k+1}^T \end{bmatrix}$$

by selecting a value which minimises the sum of a distance criterion between a received signal vector $\mathbf{y}_k = [x_1^{(k)}...x_i^{(k)}...x_{NR}^{(k)}]^T$ where $x_i^{(k)}$ denotes a signal with index $k$ received at the $i^{th}$ receive antenna and an estimate $\mathbf{C}^{(i,j)}\mathbf{h}^{(i,j)}$ where

$$\mathbf{C}^{(i,j)} = \begin{bmatrix} \mathbf{c}^{(i,j)T} & \mathbf{0}^T & \cdots & \mathbf{0}^T \\ \mathbf{0}^T & \mathbf{c}^{(i,j)T} & \cdots & \mathbf{0}^T \\ \vdots & \vdots & \ddots & \vdots \\ \mathbf{0}^T & \mathbf{0}^T & \cdots & \mathbf{c}^{(i,j)T} \end{bmatrix}$$

and $\mathbf{c}^{(i,j)}$ represents a codeword generated by a transition from a state i to a state j of the coding machine and of a history value $\psi_k^{(i)}$ associated with each state i;

(iii) determining an updated set of history values $\psi_{k+1}^{(j)}$ for each state j based upon the result of said selecting step (ii);

(iv) determining an estimated value for $\mathbf{h}_{k+1}^{(j)}$ using the selected value for $\mathbf{C}_{k+1}$; and

(v) repeating steps (i) to (iv) using the $k + 1$th iteration estimate of $\mathbf{h}^{(j)}$ in place of the $k$th iteration estimate to determine a sequence of values for $\mathbf{C}$ and hence a sequence of codewords $\mathbf{c}$.

14. A method as defined in clause 13 wherein $k$ indexes frequency.

15. A method as defined in clause 13 wherein $k$ indexes time.

16. A method of determining sequences of states and associated channel responses for decoding a trellis coded signal transmitted from multiple transmit antennas to one or more receive antennas by jointly estimating codewords of the trellis code and responses of the channels between the transmit antennas and the one or more receive antennas, the method comprising:

constructing a trellis comprising paths representing possible sequences of states of the trellis coded signal, said paths being associated with codewords of the trellis code and responses of the channels, by evolving a plurality of Kalman filters to jointly estimate said codewords and channel responses, wherein said trellis is constructed such that there is no more than one path into each node of the trellis.

17. A data structure comprising a trellis constructed in accordance with the method of clause 16.

18. A data structure as defined in clause 17 wherein each node has an associated history value representing a metric for evaluating a path including the path leading into that node for selecting a preferred path.

19. A signal decoder configured to operate in accordance with the method of any one of clauses 1 to 16.

20. A decoder for decoding a signal transmitted from a plurality of transmit antennas and received by at least one receive antenna,

the transmitted signal comprising a codeword vector $\mathbf{c}$ having elements $c_1$ to $c_{NT}$ where NT is the number of transmit antennas, elements $c_1$ to $c_{NT}$ denoting respective symbols transmitted from each transmit antenna, the codeword $\mathbf{c}$ being generated by a coding machine operating on input data symbols and having a finite plurality of states, said coding machine having a set of allowed transitions between said states, transitions of said machine being determined by a sequence of said input data symbols,

a set of channel responses describing the response of each channel between a said transmit antenna and said at least one receive antenna,

the signal received at said at least one receive antenna comprising a combination of the signals transmitted from each transmit antenna, each transmitted signal being modified by a respective one of said set of channel responses; the decoder comprising:

means for determining an initial estimate for said set of channel responses and for selecting an assumed initial state of said coding machine;

means for extrapolating from said initial estimate and state using said received signal to determine a set of estimated transmitted codewords and associated sets of channel responses, each estimated codeword having an associated estimated set of channel responses; and

means for determining an estimated input data symbol sequence from said set of estimated transmitted codewords to decode said received signal; and

wherein said means for extrapolating is configured to perform a plurality of iterations and further comprises:

means for establishing a set of allowed transitions from each possible state of said coding machine at a said iteration to each allowed new state of said coding machine for a next iteration;

means for selecting, for each allowed new state of said coding machine with a plurality of allowed transitions to the new state, one of said plurality of transitions by estimating a set of channel responses for each said allowed transition and comparing, for each said allowed transition, said received signal to a codeword associated with the transition modified by said estimated set of channel responses associated with the transition; and

means for updating the estimated set of channel responses associated with the selected transition using said received signal.

21. A decoder as defined in clause 20 wherein a history value is associated with each possible state of said coding machine at a said iteration, and wherein said means for selecting one of said plurality of allowed transitions is responsive to the history values of the possible states from which said allowed transitions come, the decoder further comprising means for determining a history value for each said allowed new state of said coding machine for use in said next iteration.

22. A decoder as defined in clause 21 wherein said means for selecting an assumed initial state of said coding machine comprises means for allocating history values to possible initial states of said coding machine such that a selected initial state is weighted more heavily than other possible initial states.

23. A decoder as defined in clause 20, 21 or 22 wherein said initial estimate for said set of channel responses is zero.

24. A decoder as defined in clause 20, 21 or 22 further comprising means for determining said initial estimate for said set of channel responses using a known portion of said received signal.

25. A decoder as defined in any one of clauses 20 to 24 wherein said means for selecting by estimating channel responses and said means for updating channel responses are implemented using Kalman filters.

26. A decoder as defined in any one of clauses 20 to 25 for decoding a signal received by a plurality of receive antennas, wherein said set of channel responses describes the response of each channel between a said transmit antenna and a said receive antenna.

27. A decoder as defined in any one of clauses 20 to 26 wherein said coding machine comprises a space-frequency coding machine and said iterations comprise frequency iterations.

28. A decoder as defined in any one of clauses 20 to 26 wherein said coding machine comprises a space-time coding machine and said iterations comprise time iterations.

29. A receiver including the decoder of any one of clauses 19 to 28.

30. Processor control code to, when running, implement the method of any one of clauses 1 to 16 or the decoder of any one of clauses 19 to 28.

31. A carrier carrying the data structure of clause 17 or 18 or processor control code of clause 30.

**Claims**

1. A method of determining sequences of states and associated channel responses for decoding a trellis coded signal transmitted from multiple transmit antennas to one or more receive antennas by jointly estimating codewords of the trellis code and responses of the channels between the transmit antennas and the one or more receive antennas, the method comprising:

   constructing a trellis comprising paths representing possible sequences of states of the trellis coded signal, said paths being associated with codewords of the trellis code and responses of the channels, by evolving a plurality of Kalman filters to jointly estimate said codewords and channel responses, wherein said trellis is constructed such that there is no more than one path into each node of the trellis.

2. A carrier medium carrying a data structure comprising a trellis constructed in accordance with the method of claim 1.

3. A carrier medium carrying a data structure as claimed in claim 2 wherein each node has an associated history value representing a metric for evaluating a path including the path leading into that node for selecting a preferred path.

Power

12 12 12     12 12

10

Frequency

Figure 1a
(PRIOR ART)

EP 1 863 241 A2

102  104  108        110        112    114

Source
Data → Baseband
Mapping → MUX → S/P → IFFT → P/S → D/A → ⬆ → Antenna     116

Pilot
Symbol     106

100  MT

118

Channel

Figure 1b
(PRIOR ART)

160  172

166  164           170  156  168

Detected
Data ← Baseband
De-Mapping ← DE-
MUX ← P/S ← FFT ← S/P ← A/D ← ⬇ ← Antenna     152

Pilot
Symbol     154

162                              AP

150

158

Figure 2a
(PRIOR ART)

Figure 2b
(PRIOR ART)

EP 1 863 241 A2

Figure 3a

Figure 3b

Figure 3c

Figure 3d

Figure 4

Figure 5

Figure 6

Figure 7

S800

INITIALISE
$$\hat{\mathbf{h}}_0, \mathbf{A}, \mathbf{Q}, \mathbf{P}_0$$

S802

RECURSION
FOR k = 1:K
FOR j = 1:J

S804

CALCULATE PREDICTIONS
$$\hat{\mathbf{h}}_{k+1|k}^{(i,j)} = \mathbf{A}\hat{\mathbf{h}}_k^{(i)}$$
$$\mathbf{P}_{k+1|k}^{(i,j)} = \mathbf{Q} + \mathbf{A}\mathbf{P}_k^{(i)}\mathbf{A}$$

S806

DETERMINE
$$\left[\mathbf{C}_{k+1}^{(j)}, \psi_{k+1}^{(j)}\right] = \underset{\widetilde{\mathbf{C}}^{(i,j)}}{\operatorname{argmin}}\left\{\left\|\mathbf{y}_{k+1} - \widetilde{\mathbf{C}}^{(i,j)}\hat{\mathbf{h}}_{k+1|k}^{(i,j)}\right\|^2 + \psi_k^{(i)}\right\}$$

S808

UPDATE ESTIMATES
$$\mathbf{K}_{k+1}^{(j)} = \mathbf{P}_{k+1|k}\mathbf{C}^{(j)^H}\left[\mathbf{R} + \mathbf{C}^{(j)}\mathbf{P}_{k+1|k}\mathbf{C}^{(j)^H}\right]^{-1}$$
$$\mathbf{P}_{k+1}^{(j)} = \left[\mathbf{I} - \mathbf{K}_{k+1}^{(j)}\mathbf{C}^{(j)}\right]\mathbf{P}_{k+1|k}^{(j)}$$
$$\hat{\mathbf{h}}_{k+1}^{(j)} = \hat{\mathbf{h}}_{k+1|k}^{(j)} + \mathbf{K}_{k+1}^{(j)}\left[\mathbf{y}_{k+1} - \mathbf{C}^{(j)}\hat{\mathbf{h}}_{k+1|k}^{(j)}\right]$$

S810

TERMINATE & TRACE BACK
$$\left\{\mathbf{c}_{K:1}^{(j)}, \hat{\mathbf{h}}_{K:1}^{(j)}\right\}$$

# Figure 8

Figure 9

Figure 10

Figure 11

Figure 12

Figure 13

Figure 14

Figure 15

Figure 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G.J. FOSCHINI ; M.J. GANS.** On limits of wireless communications in a fading environment when using multiple antennas. *Wireless Personal Communications,* 1998, vol. 6 (3), 311-335
- **V. TAROKH ; N. SESHADRI ; A. CALDERBANK.** Space-time codes for high data rate wireless communication - performance criterion and code construction. *IEEE Trans on Information Theory,* 1998, vol. 44 (2), 744-765
- **D. AGRAVAL ; V. TAROKH ; A. NAGUIB ; N. SESHADRI.** Space-time coded OFDM for high date rate wireless communications over wideband channels. *Proc. 48th IEEE VTC,* 1998
- **A. NAGUIB ; V. TAROKH ; N SESHADRI ; A. CALDERBANK.** A space-time coding based model for high data rate wireless communications. *IEEE J-SAC,* October 1998, vol. 16, 1459-1478
- **G. D. FORNEY, JR.** The Viterbi Algorithm. *Proc. IEEE,* March 1973, vol. 61 (3), 267-278

- **J.G. PROAKIS.** Digital Communications. McGraw Hill, 1995
- **S. BARO ; G. BAUCH ; A. HANSMANN.** Improved codes for space-time trellis coded modulation. *IEEE Communications Letters,* 2000, vol. 4 (1
- **R. RAHELI, POLYDOROS ; C. TZOU.** Per-survivor processing: A general approach to mlse in uncertain environments. *IEEE Transactions on Communications,* 1995, vol. 43 (234), 354-364
- **Z. LIU ; X. MA ; G. GIANNAKIS.** Space-time coding and Kalman filtering for time selective fading channels. *IEEE Transactions on Communications,* 2002, vol. 50 (2), 183-186
- **J. ZHANG ; P. DJURIC.** Joint estimation and decoding of space-time trellis codes. *EURASIP Journal on Applied Signal Processing,* 2002, vol. 2002 (3), 305-315